# EUROPEAN PATENT APPLICATION

(11) **EP 1 447 823 A1**
(43) Date of publication of application: **18.08.2004**
(21) Application number: 02781811.1
(22) Date of filing: 18.11.2002
(51) Int. Cl.: H01F 1/04, H01F 1/08, B22F 1/00, C22C 38/00

(54) **COMPOUND FOR RARE EARTH ELEMENT BASED BONDED MAGNET AND BONDED MAGNET USING THE SAME**

(30) Priority: 20.11.2001 JP 2001354315
(71) Applicant: SUMITOMO SPECIAL METALS COMPANY LIMITED, Osaka-shi, Osaka 541-0041 (JP)
(72) Inventor: NISHIUCHI, Takeshi, Ibaraki-shi, Osaka 567-0035 (JP); KANEKIYO, Hirokazu, Nishikyo-ku, Kyoto-shi, Kyoto 610-1152 (JP); HIROSAWA, Satoshi, Otsu-shi, Shiga 520-0221 (JP); MIYOSHI, Toshio, Shimamoto-cho, Mishima-gun, Osaka 618-00 (JP)
(74) Representative: Grünecker, Kinkeldey, Stockmair & Schwanhäusser Anwaltssozietät
(86) International application number: PCT/JP2002/012033
(87) International publication number: WO 2003/044811

(57) **Abstract**

A compound for a rare-earth bonded magnet includes a rare-earth alloy powder and a binder. The rare-earth alloy powder includes at least 2 mass **%** of Ti-containing nanocomposite magnet powder particles with a composition represented by (Fe₁₋ₘTₘ)_{100-x-y-z}QₓR_{y}M_{z}, where T is Co and/or Ni; Q is B with or without C; R is at least one rare-earth element substantially excluding La and Ce; M is at least one metal element selected from Ti, Zr and Hf and always includes Ti; and 10<x≦20 at%; 6≦y<10 at%; 0.1≦z≦12 at%; and 0≦m≦ 0.5. The particles include at least two ferromagnetic crystalline phases, in which hard magnetic phases have an average crystal grain size of 10 nm to 200 nm, soft magnetic phases have an average crystal grain size of 1 nm to 100 nm, and the average crystal grain size of the soft magnetic phases is smaller than that of the hard magnetic phases.

## Description

### TECHNICAL FIELD

The present invention relates to a compound for a rare-earth bonded magnet and a rare-earth bonded magnet using the compound.

### BACKGROUND ART

A bonded magnet is currently used in various types of electric equipment including motors, actuators, loudspeakers, meters and focus convergence rings. A bonded magnet is a magnet obtained by mixing together an alloy powder for a magnet (i.e., a magnet powder) and a binder (such as a resin or a low-melting metal) and then compacting and setting the mixture.

In the prior art, an Fe-R-B based magnet powder available from Magnequench International Inc. (which will be referred to herein as "MQI Inc."), or a so-called "MQ powder", is used extensively as a magnet powder for a bonded magnet. The MQ powder normally has a composition which is represented by the general formula: Fe_{100-a-b}BₐR_{b} (where Fe is iron, B is boron, and R is at least one rare-earth element selected from the group consisting of Pr, Nd, Dy and Tb). In this general formula, a and b satisfy the inequalities 1 at%≦a≦6 at% and 10 at%≦b≦25 at%, respectively. The MQ powder is a rare-earth alloy powder with a high R mole fraction b.

A conventional alloy powder for a bonded magnet such as the MQ powder is obtained by rapidly cooling and solidifying a molten material alloy (i.e., "molten alloy"). As such a melt quenching process, a single roller method (typically a melt spinning process) is often used. The single roller method is a method of cooling and solidifying a molten alloy by bringing the alloy into contact with a rotating chill roller. In this method, the resultant rapidly solidified alloy has the shape of a thin strip (or ribbon), which is elongated in the surface velocity direction of the chill roller. The thin-strip rapidly solidified alloy obtained in this manner is thermally treated and then pulverized to a mean particle size of 300 µm or less (or typically about 150 µm) to be a rare-earth alloy powder for a permanent magnet. In the following description, the rare-earth alloy powder obtained by such a melt quenching process will be simply referred to herein as a "conventional rapidly solidified magnet powder", which will not include the nanocomposite magnet powder to be described later.

By mixing the conventional rapidly solidified magnet powder with a resin (which will include herein rubber or elastomer), a compound for a bonded magnet (which will be simply referred to herein as a "compound") is prepared. An additive such as a lubricant or a coupling agent is sometimes mixed with this compound.

Thereafter, by compacting this compound into a desired shape by a compression, extrusion or injection molding process, for example, a bonded magnet is obtained as a compact for a permanent magnet (which will be sometimes referred to herein as a "permanent magnet body"). Also, the bonded magnet to be obtained by the compression or extrusion process includes the binder at a relatively low percentage, and may be further subjected to a surface treatment to protect the magnet powder from corrosion.

Meanwhile, an iron-based rare-earth alloy (e.g., Fe-R-B based, in particular) nanocomposite magnet (which is sometimes called an "exchange spring magnet") powder has recently been used more and more often as a magnet powder for a bonded magnet because such a magnet powder is relatively cost effective. The Fe-R-B based nanocomposite magnet is an iron-based alloy permanent magnet in which nanometer-scale crystals of iron-based borides (e.g., Fe₃B, Fe₂₃B₆ and other soft magnetic phases) and those of an R₂Fe₁₄B phase as a hard magnetic phase are distributed uniformly within the same metal structure and are magnetically coupled together via exchange interactions (see Japanese Laid-Open Publication No. 2001-244107, for example).

The nanocomposite magnet includes soft magnetic phases and yet exhibits excellent magnetic properties due to the magnetic coupling (i.e., the exchange interactions) between the soft and hard magnetic phases. Also, since there are those soft magnetic phases including no rare-earth elements R such as Nd, the total percentage of the rare-earth elements R can be relatively low (a typical R mole fraction is 4.5 at%). This is advantageous for the purposes of reducing the manufacturing cost of magnets and supplying the magnets constantly. Furthermore, since R, which is active to oxygen, is included at a low percentage, the magnet also excels in anticorrosiveness. The nanocomposite magnet may also be made by a melt quenching process. Then, the nanocomposite magnet is pulverized by a predetermined method to obtain a nanocomposite magnet powder.

However, the conventional compound for a rare-earth bonded magnet, made of the alloy powder (or magnet powder) described above, has the following drawbacks.

Firstly, to obtain a uniform microcrystalline structure, which contributes to expressing excellent magnetic properties, for the conventional rapidly solidified magnet powder (e.g., the MQ powder), the molten alloy needs to be rapidly cooled and solidified at a relatively high rate. For example, when the conventional rapidly solidified magnet powder is made by a single roller method, the roller should have a surface velocity of 20 m/s or more to obtain a rapidly solidified alloy (typically in a thin strip shape) with a thickness of 50 µm or less (typically 20 µm to 40 µm).

However, when the rapidly solidified alloy obtained in this manner is pulverized, the resultant powder will mostly consist of particles with aspect ratios of less than 0.3. If a compound for a rare-earth bonded magnet (which will be simply referred to herein as a "compound") is obtained by mixing the powder of such a shape and a binder together, the compound will exhibit poor flowability during an injection molding process, for example. Thus, such a compound may need to be compacted at a higher temperature and/or at a higher pressure, the types and applications of resins to be used may be limited, or the content of the magnet powder may be limited to ensure sufficient flowability. Also, it has been difficult to obtain a bonded magnet in a complex shape or a bonded magnet to fill a small gap (e.g., with a width of 2 mm) as in an IPM (interior permanent magnet) type motor including a magnet embedded rotor as disclosed in Japanese Laid-Open Publication No. 11-206075. As used herein, the "aspect ratio" means the ratio of the minor-axis size of a particle to the major-axis size thereof.

Furthermore, in a compound including the conventional rapidly solidified magnet powder (e.g., the MQ powder), the magnet powder is easily oxidized in the air, the properties of the magnet powder itself deteriorate due to the heat during an injection molding process, and the resultant bonded magnet may exhibit insufficient magnetic properties. The present inventors discovered via experiments that such oxidation was particularly noticeable when the conventional rapidly solidified magnet powder included particles with particle sizes of 53 µm or less.

Accordingly, when a bonded magnet is made of a compound including the conventional rapidly solidified magnet powder, the compacting temperature is limited to minimize the oxidation to be caused by the heat during the molding process. As a result, the compactibility, including the flowability, must be sacrificed.

Furthermore, as for a compound to be subjected to an injection molding process or an extrusion process, the compound being prepared is exposed to the heat that is applied to melt a thermoplastic resin as a binder. Thus, during the manufacturing process, the magnet powder in the compound may be oxidized and the resultant magnetic properties may deteriorate.

Furthermore, when the injection-molded body is cut off from the runner portion, the magnet powder will be exposed on the resin surface on the cross section of the molded body. Also, the magnet powder itself may be exposed on the cross section. When the magnet powder is exposed in some areas in this manner, corrosion easily advances from those areas. This problem is particularly noticeable when the wettability between the resin and the magnet powder is poor. Also, it depends not only on a particular material combination but also on how the process step of mixing the resin and magnet powder material is carried out. Specifically, the conventional rapidly solidified magnet powder has a small aspect ratio, and is hard to mix uniformly in the compound preparing process step. Thus, in the resultant compound, the wettability between the resin and the magnet powder may be poor enough to expose the magnet powder particles here and there. Furthermore, since the magnet powder has a large aspect ratio, the magnet powder is crushed by shear force applied in the mixing process step to newly expose other cross sections easily. As a result, the magnet powder in the resultant compound is easily oxidizable.

On the other hand, the conventional Fe-R-B based nanocomposite magnet powder includes the rare-earth elements at a relatively low mole fraction and typically includes 30 vol% or less of hard magnetic phases. Thus, the magnetic properties (e.g., coercivity H_{cJ}) thereof are inferior to those of the conventional rapidly solidified magnet powder (such as the MQ powder). Accordingly, it is difficult to make a bonded magnet with sufficient magnetic properties from a compound including only the nanocomposite magnet powder as its magnet powder. For example, a bonded magnet for use in a motor for a hard disk drive (HDD) could not be made from such a nanocomposite magnet powder. For that reason, the conventional nanocomposite magnet powder described above needs to be mixed with the conventional rapidly solidified magnet powder. Consequently, it has been difficult so far to obtain a bonded magnet with excellent magnetic properties while totally eliminating the problems of the compound including the conventional rapidly solidified magnet powder.

### DISCLOSURE OF INVENTION

In order to overcome the problems described above, an object of the present invention is to provide a compound for a rare-earth bonded magnet, which can minimize the deterioration in magnetic properties due to the heat applied to form a bonded magnet by a compaction process, can improve the compactability including flowability, and can make a rare-earth bonded magnet with excellent magnetic properties and anticorrosiveness.

A compound for a rare-earth bonded magnet according to the present invention includes a rare-earth alloy powder and a binder. The rare-earth alloy powder includes at least 2 mass % of Ti-containing nanocomposite magnet powder particles. The Ti-containing nanocomposite magnet powder particles have a composition represented by the general formula: (Fe₁₋ₘTₘ)_{100-x-y-z}QₓR_{y}M_{z}, where T is at least one element selected from the group consisting of Co and Ni; Q is at least one element selected from the group consisting of B and C and always includes B; R is at least one rare-earth element substantially excluding La and Ce; M is at least one metal element selected from the group consisting of Ti, Zr and Hf and always includes Ti; and the mole fractions x, y, z and m satisfy the inequalities of: 10 at%<x≦20 at%; 6 at%≦y<10 at%; 0.1 at% ≦z≦12 at%; and 0≦m≦0.5, respectively. The Ti-containing nanocomposite magnet powder particles include at least two ferromagnetic crystalline phases, in which hard magnetic phases have an average crystal grain size of 10 nm to 200 nm, soft magnetic phases have an average crystal grain size of 1 nm to 100 nm, and the average crystal grain size of the soft magnetic phases is smaller than the average crystal grain size of the hard magnetic phases.

In one embodiment, the soft magnetic phases are present on a grain boundary between the hard magnetic phases.

The Ti-containing nanocomposite magnet powder particles preferably have aspect ratios of 0.3 to 1.0.

The rare-earth alloy powder preferably includes at least 10 mass % of the Ti-containing nanocomposite magnet powder particles with particle sizes of 53 µm or less.

The rare-earth alloy powder preferably includes at least 8 mass % of the Ti-containing nanocomposite magnet powder particles with particle sizes of 38 µm or less.

The rare-earth alloy powder preferably includes at least 70 mass % of the Ti-containing nanocomposite magnet powder particles.

The rare-earth alloy powder preferably consists essentially of the Ti-containing nanocomposite magnet powder particles.

The rare-earth alloy powder preferably has an oxygen content of less than 0.24 mass % when left in the air for an hour at a heating temperature of 300 °C . More preferably, the rare-earth alloy powder has an oxygen content of 0.20 mass % or less when left in the air for an hour at a heating temperature of 350 °C.

When left in the air at 400 °C for 10 minutes, the compound preferably increases its mass by less than 0.26 mass % due to oxidation.

The binder may include a thermoplastic resin. Alternatively, the binder may include a thermosetting resin and a thermoplastic resin.

The thermoplastic resin preferably has a softening point of 180 °C or more.

The compound preferably includes the rare-earth alloy powder at 60 mass % to 99 mass % with respect to the sum of the rare-earth alloy powder and the binder.

The rare-earth alloy powder is preferably made up of powder particles obtained by pulverizing a rapidly solidified alloy with a thickness of 60 µm to 300 µm.

The rare-earth alloy powder is preferably made up of powder particles obtained by pulverizing a rapidly solidified alloy that has been formed by a strip casting process.

The compound preferably further includes a coupling agent.

A rare-earth bonded magnet according to the present invention is made of the compound for a rare-earth bonded magnet according to any of the preferred embodiments described above. A rare-earth bonded magnet according to a preferred embodiment is made by an injection molding process. In this case, the rare-earth alloy powder is preferably loaded to at least 60 vol%.

### BRIEF DESCRIPTION OF DRAWINGS

FIG. **1** is a graph showing a relationship between the maximum energy product (BH)ₘₐₓ and the concentration of boron in an Nd-Fe-B nanocomposite magnet including no additive Ti, in which the white bars represent data about samples containing 10 at% to 14 at% of Nd, while the black bars represent data about samples containing 8 at% to 10 at% of Nd.
FIG. **2** is a graph showing a relationship between the maximum energy product (BH)ₘₐₓ and the concentration of boron in an Nd-Fe-B nanocomposite magnet including additive Ti, in which the white bars represent data about samples containing 10 at% to 14 at% of Nd, while the black bars represent data about samples containing 8 at% to 10 at% of Nd.
FIG. **3** schematically illustrates an R₂Fe₁₄B compound phase and an (Fe, Ti)-B phase in the magnet of the present invention.
FIG. **4** schematically illustrates how rapidly solidified alloys change their microstructures during the crystallization processes thereof in a situation where Ti is added and in situations where Nb or another metal element is added instead of Ti.
FIG. **5(a)** is a cross-sectional view illustrating an overall arrangement of a machine for use to make a rapidly solidified alloy for the iron-based rare-earth alloy magnet of the present invention.
FIG. **5(b)** illustrates a portion of the machine, where a melt is cooled and rapidly solidified, on a larger scale.
FIG. **6(a)** is a perspective view schematically illustrating an alloy yet to be pulverized and pulverized powder particles for the present invention.
FIG. **6(b)** is a perspective view schematically illustrating an alloy yet to be pulverized and pulverized powder particles for the prior art.
FIG. **7(a)** is a view showing the configuration of a pin mill for use in an embodiment of the present invention, and FIG. **7(b)** is a view showing the arrangement of pins in the pin mill shown in FIG. **7(a)**.
FIG. **8(a)** is a view showing the configuration of a gas atomization system for use in an embodiment of the present invention, and FIG. **8(b)** is a perspective view illustrating a gas nozzle for use in this system.
FIG. **9** is a graph showing the mass increase percentages of a Ti-containing nanocomposite magnet powder according to the present invention and conventional rapidly solidified magnet powders with the heat applied thereto.
FIG. **10** is a graph showing the densities of compacts for a bonded magnet, which were made of Ti-containing nanocomposite magnet powders with mutually different particle size distributions.
FIG. **11** is an exploded perspective view schematically illustrating the construction of a stepping motor **100** including a permanent magnet rotor as an embodiment of the present invention.
FIGS. **12(a)** through **12(d)** are views showing a bonded-magnet-integrated rotor **200** and a compacting process thereof in accordance with an embodiment of the present invention.
FIG. **13** is a schematic representation illustrating the configuration of a magnet-embedded rotor **300** as another embodiment of the present invention.
FIGS. **14(a)** and **14(b)** are views schematically illustrating the structure of a rotary encoder **411** as still another embodiment of the present invention.
FIGS. **15(a)** and **15(b)** are cross-sectional views schematically illustrating the structure of an electrophotograph process cartridge **501**, including a magnetic roller **507**, as yet another embodiment of the present invention.
FIGS. **16(a)** and **16(b)** are graphs showing the evaluated anticorrosiveness of bonded magnets made of compounds of Example No. 4 of the present invention and Comparative Examples Nos. 2 and 3 when those magnets were left in a high-temperature, high-humidity environment with a relative humidity of 90%, wherein:

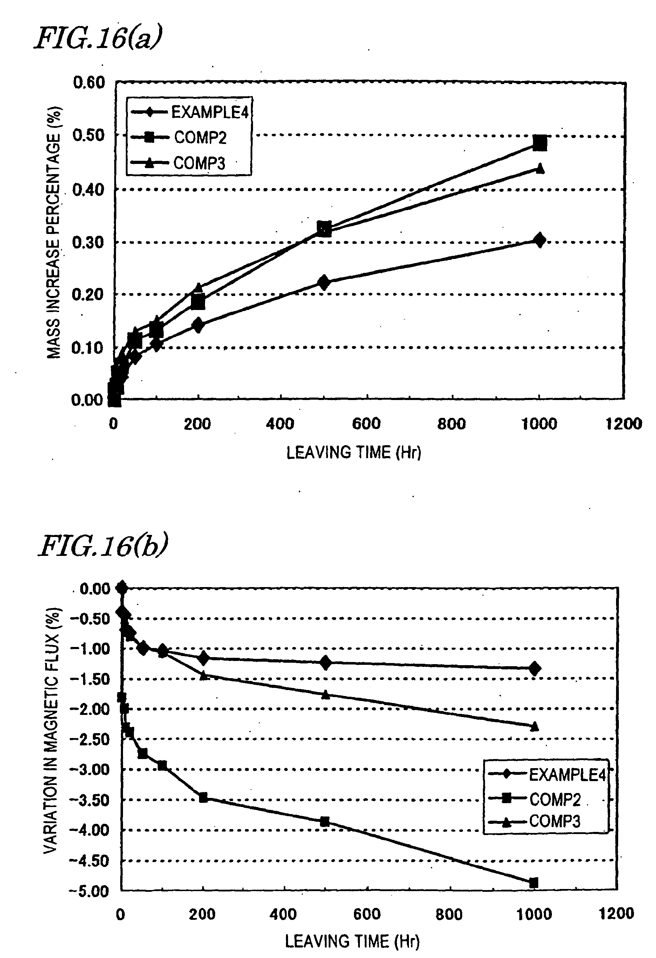

FIG. **16(a)** is a graph plotting the mass increase percentage with respect to the time in which the magnet was left; and
FIG. **16(b)** is a graph plotting the variation in magnetic flux (Φ open) with respect to the time in which the magnet was left.

### BEST MODE FOR CARRYING OUT THE INVENTION

In a compound for a rare-earth bonded magnet according to the present invention, the rare-earth alloy powder included therein (which will be referred to herein as a "magnet powder" simply) includes at least 2 mass % of Ti-containing powder for a nanocomposite magnet (which will be referred to herein as a "Ti-containing nanocomposite magnet powder").

The Ti-containing nanocomposite magnet powder has a composition represented by the general formula: (Fe₁₋ₘTₘ)_{100-x-y- z}QₓR_{y}M_{z}, where T is at least one element selected from the group consisting of Co and Ni; Q is at least one element selected from the group consisting of B and C and always includes B; R is at least one rare-earth element substantially excluding La and Ce; M is at least one metal element selected from the group consisting of Ti, Zr and Hf and always includes Ti; and the mole fractions x, y, z and m satisfy the inequalities of: 10 at%<x≦20 at%; 6 at%≦y<10 at%; 0.1 at% ≦z≦12 at%; and 0≦m≦0.5, respectively. The Ti-containing nanocomposite magnet powder includes at least two ferromagnetic crystalline phases, in which hard magnetic phases have an average crystal grain size of 10 nm to 200 nm, soft magnetic phases have an average crystal grain size of 1 nm to 100 nm, and the average crystal grain size of the soft magnetic phases is smaller than the average crystal grain size of the hard magnetic phases. In the general formula representing the composition of the Ti-containing nanocomposite magnet powder, the mole fractions x, y, z and m preferably satisfy the inequalities of 10 at%<x<17 at%, 7 at%≦y≦9.3 at% and 0.5 at%≦z≦6 at%, respectively. More preferably, 8≦y≦9.0 is satisfied. It should be noted that if 15 at%<x≦20 at%, then 3.0 at%<z<12 at% is preferably satisfied.

The Ti-containing nanocomposite magnet powder included in the compound of the present invention has the composition and structure described above. Accordingly, in the Ti-containing nanocomposite magnet powder, the hard and soft magnetic phases thereof are coupled together through magnetic exchange interactions. Thus, although the magnet powder includes a rare-earth element at a relatively low mole fraction, the magnet powder still exhibits excellent magnetic properties that are at least comparable to, or even better than, those of a conventional rapidly solidified magnet powder. Furthermore, the magnet powder has superior magnetic properties (of which the coercivity H_{cJ} is particularly high) to those of a conventional nanocomposite magnet powder including an Fe₃B phase as a main phase. Specifically, the Ti-containing nanocomposite magnet powder included in the compound of the present invention achieves a maximum energy product (BH)ₘₐₓ of at least 70 kJ/m³, a coercivity H_{cJ} of at least 700 kA/m and a remanence Bᵣ of at least 0.7 T, and may have a maximum energy product (BH)ₘₐₓ of 90 kJ/m³ or more, a coercivity H_{cJ} of 800 kA/m or more and a remanence Bᵣ of 0.8 T or more (see Table 3 to be described later). The Ti-containing nanocomposite magnet powder can easily achieve a coercivity H_{cJ} of 480 kA/m or more, which has been hard to achieve for the conventional nanocomposite magnet powder. Thus, even a compound including only the Ti-containing nanocomposite magnet powder can also be used in a broad variety of applications (e.g., various types of motors).

As described above, the Ti-containing nanocomposite magnet powder exhibits magnetic properties that are at least comparable to, or even better than, those of the conventional rapidly solidified magnet powder. Thus, a compound including the Ti-containing nanocomposite magnet powder instead of the conventional rapidly solidified magnet powder (e.g., MQ powder) can exhibit magnetic properties that are at least comparable to, or even better than, those of the conventional compound. Naturally, the compound may include, as its magnet powder, either the Ti-containing nanocomposite magnet powder alone or a mixture also including the conventional rapidly solidified magnet powder and/or the conventional nanocomposite magnet powder. Also, to achieve any of various other objects such as cost reduction, the compound of the present invention may further include a ferrite magnet powder, an Sm-Fe-N based magnet powder, or any other magnet powder.

As will be described later by way of illustrative examples, the compound of the present invention includes at least 2 mass% of Ti-containing nanocomposite magnet powder in the overall magnet powder, thus exhibiting excellent compactibility and flowability in an injection molding or extrusion molding process. As a result, a bonded magnet with excellent magnetic properties can be obtained relatively easily, and other effects are also achieved. More preferably, at least 5 mass **%** of the magnet powder in the compound is the Ti-containing nanocomposite magnet powder.

As will be described in detail later, due to the action of Ti, the Ti-containing nanocomposite magnet powder included in the compound of the present invention may also be obtained by quenching a molten alloy at a cooling rate (of 10² °C/s to 10⁶ °C /s ) that is lower than that of the conventional rapidly solidified magnet powder. For example, even when the roller surface velocity is 15 m/s or less, an alloy with excellent magnetic properties can also be obtained. Accordingly, even if a (thin-strip) rapidly solidified alloy is formed thicker (e.g., to a thickness of 60 µm or more) than the conventional one by a strip casting process, the metal structure described above can also be obtained. The strip casting process promises good mass productivity. Thus, a Ti-containing nanocomposite magnet powder exhibiting stabilized magnetic properties can be manufactured at a relatively low cost.

If a rapidly solidified alloy with a thickness of 60 µm to 300 µm, for example, is formed by a strip casting process and then pulverized by a pin disk mill, for example, such that the magnet powder has a mean particle size of 70 µm, then a powder, consisting of particles with aspect ratios of 0.3 to 1.0, can be obtained relatively easily. Also, the rapidly solidified alloy for the Ti-containing nanocomposite magnet powder is made up of smaller crystal grains than the conventional rapidly solidified alloy. Thus, the former rapidly solidified alloy is easily broken in random directions, thus making powder particles having an isometric shape (i.e., having an aspect ratio close to one) relatively easily. Accordingly, by controlling the conditions of the pulverization process, a powder consisting of particles with aspect ratios of at least 0.4 can also be obtained easily.

Alternatively, the Ti-containing nanocomposite magnet powder may also be prepared by an atomization process (e.g., a gas atomization process), which results in an even lower cooling rate (of 10² °C/s to 10⁴ °C/s) than the strip casting process. According to an atomization process, a Ti-containing nanocomposite magnet powder having a mean particle size of 1 µm to 100 µm and an aspect ratio close to one (i.e., spherical) can be directly obtained from a molten alloy. Thus, the atomization process, requiring no fine pulverization process, is superior in mass productivity to even the strip casting process.

Compared to a compound including the conventional rapidly solidified magnet powder with aspect ratios of less than 0.3, the compound including the Ti-containing nanocomposite magnet powder, consisting of particles with aspect ratios of at least 0.3 (more preferably, at least 0.4), exhibits superior compactibility and flowability. By mixing at least 2 mass % of Ti-containing nanocomposite magnet powder, having aspect ratios of 0.3 to 1.0, with respect to the overall magnet powder in the compound, the flowability is improvable. To further improve the flowability, the magnet powder in the compound preferably includes at least 5 mass % of Ti-containing nanocomposite magnet powder with aspect ratios of 0.3 or more.

In the Ti-containing nanocomposite magnet powder, the rare-earth element R is included at a relatively low mole fraction, small boride phases are dispersed so as to surround the R₂Fe₁₄B phase, and those boride phases include a greater amount of Ti than any other phase, because Ti exhibits high affinity for boron. Thus, the Ti-containing nanocomposite magnet powder is superior to the conventional rapidly solidified magnet powder in oxidation resistance.

The Ti-containing nanocomposite magnet powder exhibits excellent oxidation resistance, and is not oxidized easily even at a temperature at which the compound is compacted (e.g., 300 °C) as will be described in detail later with reference to Table 1. Also, even in the process step of preparing the compound including the Ti-containing nanocomposite magnet powder, the compound is not affected by the oxidation of the magnet powder easily. Instead, the compound maintains the excellent magnetic properties of the Ti-containing nanocomposite magnet powder. In addition, as will be described later for specific examples, the compound itself also exhibits excellent oxidation resistance. When the Ti-containing nanocomposite magnet powder and the conventional rapidly solidified magnet powder and/or the conventional nanocomposite magnet powder are used as a mixture, the compound is preferably prepared using a magnet powder, which has had its mixing ratio adjusted so as to have an oxygen content of less than 0.24 mass% when left in the air for one hour at a heating temperature of 300 °C. More preferably, the compound is prepared so as to have an oxygen content of 0.20 mass% or less when left in the air for one hour at a heating temperature of 350 °C.

Furthermore, since the Ti-containing nanocomposite magnet powder exhibits excellent oxidation resistance, resins with high melting or softening points (e.g., polyimides, liquid crystal polymers and high-molecular-weight-grade resins), which are hard to use in the prior art, and metals having higher melting points than the conventional ones may also be used as binders. For example, even when a thermoplastic resin having a softening point of 180 °C or more (or even 250 °C or more as in polyphenylene sulfide resin) is used, a compound to be injection molded, exhibiting excellent magnetic properties and compactibility, can be obtained. It should be noted that the softening point of a resin is herein obtained by a Vicat softening point test (described in JIS K6870, for example) no matter whether the resin is crystalline or amorphous. Also, even when a thermosetting resin is used, the resin can be cured at a higher setting temperature than the conventional one. Furthermore, since the magnet powder itself exhibits excellent anticorrosiveness, the magnet performance deteriorates extremely slightly even when the thermosetting process is carried out in the air. That is to say, there is no need to carry out the thermosetting process in an inert atmosphere, and therefore, the process cost can be cut down. Furthermore, since such heat-resistant resins can be adopted, a heating/degassing process, which is carried out to minimize the emission of an unwanted gas from a resin coating for an HDD, for example, can be performed at a higher temperature. Thus, a bonded magnet that can be used more effectively in an HDD, for example, can be obtained.

By using such a resin having a higher softening point or a higher setting temperature than the conventional one, the properties of the bonded magnet (e.g., heat resistance and mechanical properties) can be improved. To ensure sufficient thermal oxidation resistance, when the mixture of the Ti-containing nanocomposite magnet powder and the conventional rapidly solidified magnet powder and/or the conventional nanocomposite magnet powder is used, the compound is preferably prepared so as to increase its mass due to oxidation by no greater than 0.26 mass% when left in the air for 10 minutes at 400 °C.

The conventional rapidly solidified magnet powder includes the rare-earth element R at a relatively high mole fraction, and is oxidizable relatively easily. Thus, the smaller the particle size, the more significantly the magnetic properties are deteriorated due to the oxidation of the surface of the powder particles. In contrast, in the Ti-containing nanocomposite magnet powder, the magnetic properties thereof are deteriorated due to oxidation to a much lesser degree, and even relatively small particles (e.g., with particle sizes of 53 µm or less) show almost no deterioration in magnetic properties due to oxidation. Accordingly, in the magnet powder included in the compound, the powder particles having particle sizes of 53 µm or less are preferably those of the Ti-containing nanocomposite magnet powder.

Also, considering the packability of the magnet powder, the magnet powder preferably includes those powder particles with particle sizes of at most 53 µm at 10 mass% or more, and more preferably at 20 mass% or more. Furthermore, a compound for use to make a high-density compact preferably includes a magnet powder including at least 8 mass% of powder particles with particle sizes of 38 µm or less. Even when powder particles with particle sizes of 53 µm or less are included at 20 mass% or more in the Ti-containing nanocomposite magnet powder, the magnet powder for a bonded magnet never exhibits deteriorated magnetic properties. Compared with a magnet powder for a bonded magnet, including the same amount of conventional rapidly solidified magnet powder with particle sizes of 53 µm or less, the magnetic properties are rather improved.

A magnet powder for a bonded magnet is normally made up of particles with a maximum particle size of 500 µm or less (typically 300 µm or less). To improve the packability, the magnet powder preferably includes a rather high percentage of particles with particle sizes of 53 µm or less (or 38 µm or less, in particular). In the conventional rapidly solidified magnet powder, however, particles with relatively small particle sizes exhibit inferior magnetic properties as described above. Thus, to improve the magnetic properties, the packability has to be sacrificed. Conversely, to improve the packability, the magnetic properties have to be sacrificed.

In contrast, in the Ti-containing nanocomposite magnet powder, even particles with small particle sizes also exhibit excellent magnetic properties. Thus, even when the magnet powder prepared includes small particles (e.g., with particle sizes of 53 µm or less) at a relatively high percentage, the magnetic properties do not deteriorate. For example, even if a magnet powder having a particle size distribution as disclosed in Japanese Laid-Open Publication No. 63-155601 is prepared, there is no need to sacrifice the magnetic properties. It should be noted that the particle size distribution may be controlled by classifying the Ti-containing nanocomposite magnet powder, obtained by the method described above, depending on the necessity.

When a compound is prepared by using a magnet powder including the Ti-containing nanocomposite magnet powder, not only the compactibility but also the magnetic properties of the resultant bonded magnet can be improved effectively (this is also true even when the Ti-containing nanocomposite magnet powder is mixed with the conventional rapidly solidified magnet powder). This effect is achieved not just because of the difference in magnetic properties between the Ti-containing nanocomposite magnet powder and the conventional rapidly solidified magnet powder but also because the deterioration in magnetic properties, which is usually caused due to the oxidation of the conventional rapidly solidified magnet powder in the compound, can be minimized by using the Ti-containing nanocomposite magnet powder. Specifically, the deterioration is minimized because the compound preparing process step and compacting process step can be carried out at lower temperatures when the Ti-containing nanocomposite magnet powder is used. That is to say, in the compound of the present invention, the Ti-containing nanocomposite magnet powder itself does exhibit excellent oxidation resistance. In addition, the unwanted oxidation of the conventional rapidly solidified magnet powder, which is used in combination with the Ti-containing nanocomposite magnet powder during the manufacturing process of the bonded magnet and which exhibits inferior oxidation resistance, can also be minimized.

Furthermore, the compound including the Ti-containing nanocomposite magnet powder exhibits excellent compactibility and flowability. Thus, the load on an apparatus for use in a kneading process (such as a kneader) can be lightened. As a result, the productivity of the compound increases and the manufacturing cost decreases. Furthermore, the resin and the magnet powder can be kneaded (or mixed) together well enough. Thus, a compound with good anticorrosiveness, in which the surface of the magnet powder particles is well coated with the resin, can be obtained. Also, the amount of impurities to enter the compound during the kneading process can be decreased as well. Furthermore, since the kneading and compacting process steps can be carried out at lower temperatures, the deterioration of the resin can be minimized during the kneading and compacting process steps. To further improve the wettability, kneadability and bond strength between the resin and the magnet powder, a coupling agent is preferably added. The coupling agent may be added either in advance to the surface of the magnet powder or during the process step of mixing the magnet powder with the resin. By adding the coupling agent, the kneading torque can be decreased and the effects of the present invention are achieved more fully.

To make full use of the excellent magnetic properties, oxidation resistance, and improved compactibility and flowability of the Ti-containing nanocomposite magnet powder at the same time, at least 70 mass% of the overall magnet powder is preferably the Ti-containing nanocomposite magnet powder. Most preferably, only the Ti-containing nanocomposite magnet powder should be used.

The compound of the present invention exhibits good compactibility. Thus, the gap percentage of the compact can be reduced and a bonded magnet with an increased magnet powder packability can be obtained. Also, when a thermosetting resin is used as the resin binder and when the mixture is compacted by a compression process, a bonded magnet with a magnet powder packability of 80 vol% or more can be obtained easily. On the other hand, when a thermoplastic resin is used as the resin binder and when the mixture is compacted by an injection molding process, a bonded magnet with a magnet powder packability of 60 vol% or more can be obtained easily. In this manner, a bonded magnet with a higher packability can be obtained. As a result, a bonded magnet, exhibiting magnetic properties superior to the conventional ones, is provided.

Hereinafter, a compound for a rare-earth bonded magnet according to the present invention will be described in further detail.

### Ti-containing nanocomposite magnet powder

The Ti-containing nanocomposite magnet powder to be included as at least portion of the compound for a rare-earth bonded magnet according to the present invention is formed by rapidly cooling and solidifying a melt of an Fe-R-B alloy containing Ti. This rapidly solidified alloy includes crystalline phases. However, if necessary, the alloy is heated and further crystallized.

The present inventors discovered that when Ti was added to an iron-based rare-earth alloy with a composition defined by a particular combination of mole fraction ranges, the nucleation and growth of an α-Fe phase, often observed while the melt is cooled and obstructing the expression of excellent magnetic properties (e.g., high coercivity and good loop squareness of the demagnetization curve among other things), could be minimized and the crystal growth of an R₂Fe₁₄B compound phase, contributing to hard magnetic properties, could be advanced preferentially and uniformly.

Unless Ti is added, the α-Fe phase easily nucleates and grows faster and earlier than an Nd₂Fe₁₄B phase. Accordingly, when the rapidly solidified alloy is thermally treated to be crystallized, the α-Fe phase with soft magnetic properties will have grown excessively and no excellent magnetic properties (e.g., H_{cJ} and loop squareness, in particular) will be achieved.

In contrast, where Ti is added, the nucleation and growth kinetics of the α-Fe phase would be slowed down, i.e., it would take a longer time for the α-Fe phase to nucleate and grow. Thus, the present inventors believe that the Nd₂Fe₁₄B phase would start to nucleate and grow before the α-Fe phase has nucleated and grown coarsely. For that reason, the Nd₂Fe₁₄B phase can be grown sufficiently and distributed uniformly before the α-Fe phase grows too much. Furthermore, it is believed that Ti is hardly included in the Nd₂Fe₁₄B phase, but present profusely in the iron-based boride or in the interface between the Nd₂Fe₁₄B phase and the iron-based boride phase, thus stabilizing the iron-based boride.

That is to say, the Ti-containing nanocomposite magnet powder for use in the compound of the present invention can have a nanocomposite structure in which Ti contributes to significant reduction in grain size of the soft magnetic phases (including the iron-based boride and α-Fe phases), uniform distribution of the Nd₂Fe₁₄B phase and increase in volume percentage of the Nd₂Fe₁₄B phase. As a result, compared to the situation where no Ti is added, the coercivity and magnetization (or remanence) increase and the loop squareness of the demagnetization curve improves, thus contributing to achieving excellent magnetic properties in the resultant bonded magnet.

Hereinafter, the Ti-containing nanocomposite magnet powder for use in the compound of the present invention will be described in further detail.

The Ti-containing nanocomposite magnet powder included at least in the compound of the present invention is preferably represented by the general formula: (Fe₁₋ₘTₘ)_{100-x-y-z}QₓR_{y}M_{z}, where T is at least one element selected from the group consisting of Co and Ni; Q is at least one element selected from the group consisting of B (boron) and C (carbon) and always includes B; R is at least one rare-earth element substantially excluding La and Ce; and M is at least one metal element selected from the group consisting of Ti, Zr and Hf and always includes Ti.

The mole fractions x, y, z and m preferably satisfy the inequalities of: 10 at%<x≦20 at%; 6 at%≦y≦10 at%; 0.1 at% ≦z≦12 at%; and 0≦m≦0.5, respectively.

The Ti-containing nanocomposite magnet powder includes a rare-earth element at as small a mole fraction as less than 10 at%. However, since Ti has been added, the magnet powder achieves the unexpected effects of keeping, or even increasing, the magnetization (remanence) Bᵣ and improving the loop squareness of the demagnetization curve thereof compared to the situation where no Ti is added.

In the Ti-containing nanocomposite magnet powder, the soft magnetic phases have a very small grain size. Accordingly, the respective constituent phases are coupled together through exchange interactions. For that reason, even though soft magnetic phases such as iron-based boride and α-Fe phases are present along with the hard magnetic R₂Fe₁₄B compound phase, the alloy as a whole can exhibit excellent squareness at the demagnetization curve thereof.

The Ti-containing nanocomposite magnet powder preferably includes iron-based borides and α-Fe phases with a saturation magnetization equal to, or even higher than, that of the R₂Fe₁₄B compound phase. Examples of those iron-based borides include Fe₃B (with a saturation magnetization of 1.5 T) and Fe₂₃B₆ (with a saturation magnetization of 1.6 T). In this case, the R₂Fe₁₄B phase has a saturation magnetization of about 1.6 T when R is Nd, and the α-Fe phase has a saturation magnetization of 2.1 T.

Normally, where the mole fraction x of B is greater than 10 at% and the mole fraction y of the rare-earth element R is 5 at% to 8 at%, R₂Fe₂₃B₃ is produced. However, even when a material alloy with such a composition is used, the addition of Ti as is done in the present invention can produce R₂Fe₁₄B phase and soft magnetic iron-based boride phases such as Fe₂₃B₆ and Fe₃B. instead of the unwanted R₂Fe₂₃B₃ phase. That is to say, when Ti is added, the percentage of the R₂Fe₁₄B phase can be increased and the iron-based boride phases produced contribute to increasing the magnetization.

The present inventors discovered via experiments that only when Ti was added, the magnetization did not decrease but rather increased as opposed to any other metal element additive such as V, Cr, Mn, Nb or Mo. Also, when Ti was added, the loop squareness of the demagnetization curve was much better than that obtained by adding any of these elements.

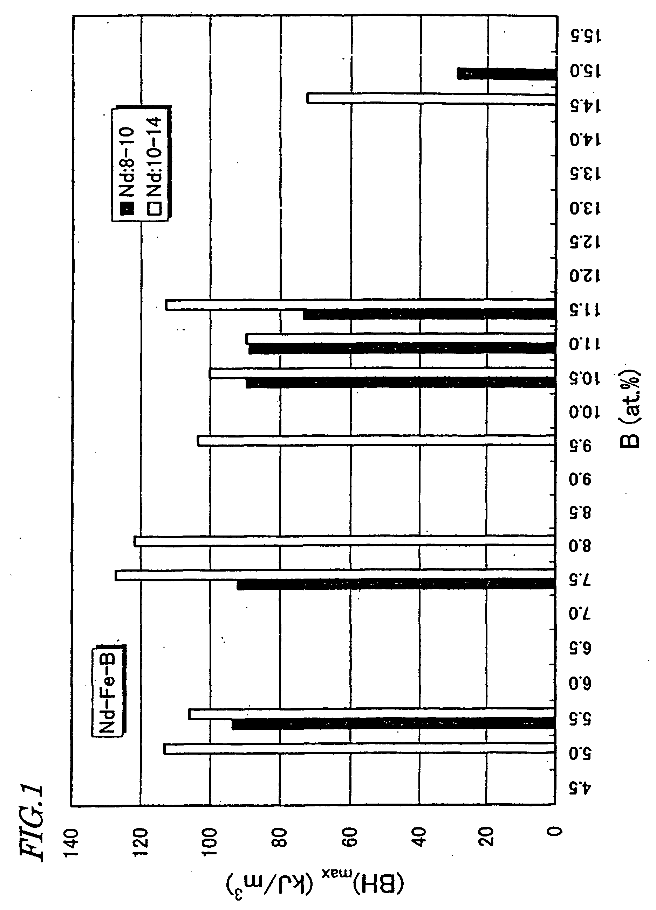

Furthermore, these effects achieved by the additive Ti are particularly significant where the concentration of B is greater than 10 at%. Hereinafter, this point will be described with reference to FIG. **1**.

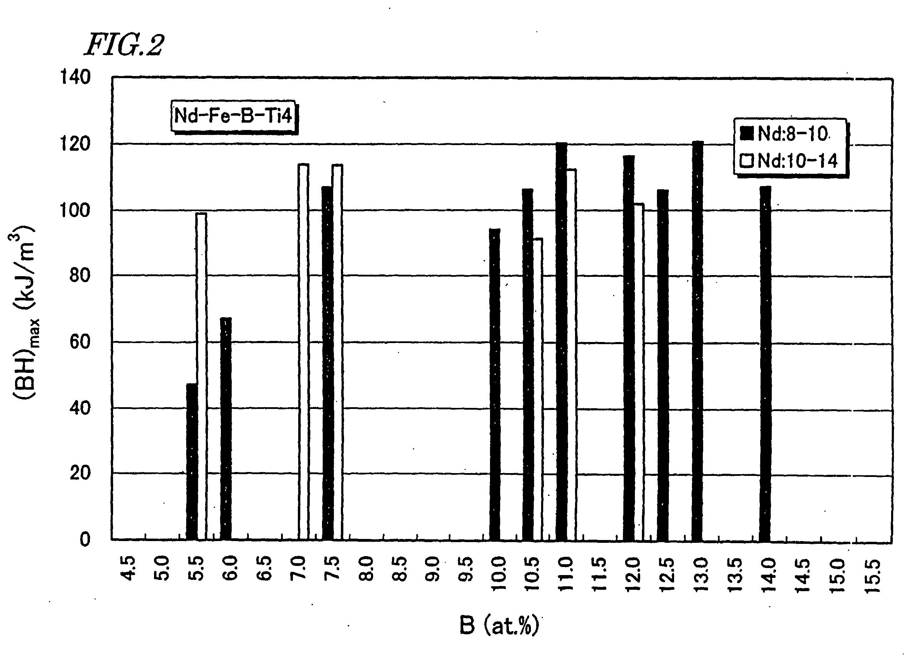

FIG. **1** is a graph showing a relationship between the maximum energy product (BH)ₘₐₓ and the concentration of B in an Nd-Fe-B magnet alloy to which no Ti is added. In FIG. **1**, the white bars represent data about samples containing 10 at% to 14 at% of Nd, while the black bars represent data about samples containing 8 at% to less than 10 at% of Nd. On the other hand, FIG. **2** is a graph showing a relationship between the maximum energy product (BH)ₘₐₓ and the concentration of B in an Nd-Fe-B magnet alloy to which Ti is added. In FIG. **2**, the white bars represent data about samples containing 10 at% to 14 at% of Nd, while the black bars represent data about samples containing 8 at% to less than 10 at% of Nd.

As can be seen from FIG. **1**, once the concentration of B exceeds 10 at%, the samples including no Ti exhibit decreased maximum energy products (BH)ₘₐₓ no matter how much Nd is contained therein. Where the content of Nd is 8 at% to 10 at%, this decrease is particularly noticeable. This tendency has been well known in the art and it has been widely believed that any magnet alloy, including an Nd₂Fe₁₄B phase as its main phase, should not contain more than 10 at% of B. For instance, United States Patent No. 4,836,868 discloses a working example in which B has a concentration of 5 at% to 9.5 at%. This patent teaches that the concentration of B is preferably 4 at% to less than 12 at%, more preferably 4 at% to 10 at%.

In contrast, as can be seen from FIG. **2**, the samples including the additive Ti show increased maximum energy products (BH)ₘₐₓ in a certain range where the B concentration is greater than 10 at%. This increase is particularly remarkable where the Nd content is 8 at% to 10 at%.

Thus, the present invention can reverse the conventional misbelief that a B concentration of greater than 10 at% degrades the magnetic properties and can achieve the unexpected effects just by adding Ti. As a result, a magnet powder, contributing to advantageous features of the compound of the present invention described above, can be obtained.

Next, a method of making the Ti-containing nanocomposite magnet powder, at least included in the compound for a rare-earth bonded magnet of the present invention, will be described.

### Rapidly solidified alloy for

### Ti-containing nanocomposite magnet powder

A melt of the iron-based alloy with the composition represented by the general formula: (Fe₁₋ₘTₘ)_{100-x-y-z}QₓR_{y}M_{z} (where x, y, z and m satisfy 10 at%<x≦20 at%, 6 at%≦y<10 at%, 0.1 at%≦z≦12 at% and 0≦m≦0.5, respectively) is rapidly cooled within an inert atmosphere, thereby preparing a rapidly solidified alloy including an R₂Fe₁₄B compound phase at 60 volume % or more. The average crystal grain size of the R₂Fe₁₄B compound phase in the rapidly solidified alloy can be 80 nm or less, for example. If necessary, this rapidly solidified alloy may be heat-treated. Then, the amorphous phases remaining in the rapidly solidified alloy can be crystallized.

In an embodiment in which a melt spinning process or a strip casting process is carried out by using a chill roller, the molten alloy is rapidly cooled within an atmosphere having a pressure of 1.3 kPa or more. Then, the molten alloy is not just rapidly cooled through the contact with the chill roller but also further cooled appropriately due to the secondary cooling effects caused by the atmospheric gas even after the solidified alloy has left the chill roller.

According to the results of experiments the present inventors carried out, while the rapid cooling process is performed, the atmospheric gas should have its pressure controlled preferably at 1.3 kPa or more but the atmospheric pressure ( = 101. 3 kPa) or less, more preferably 10 kPa to 90 kPa, and even more preferably 20 kPa to 60 kPa.

Where the atmospheric gas has a pressure falling within any of these preferred ranges, the surface velocity of the chill roller is preferably 4 m/s to 50 m/s. This is because if the roller surface velocity is lower than 4 m/s, then the R₂Fe₁₄B compound phase, included in the rapidly solidified alloy, will have excessively large crystal grains. In that case, the R₂Fe₁₄B compound phase will further increase its grain size when thermally treated, thus possibly deteriorating the resultant magnetic properties.

According to the experimental results the present inventors obtained, the roller surface velocity is more preferably 5 m/s to 30 m/s, even more preferably 5 m/s to 20 m/s.

When a material alloy having the composition of the Ti-containing nanocomposite magnet powder included in the compound of the present invention is rapidly cooled and solidified, the resultant rapidly solidified alloy has either a structure in which almost no α-Fe phase with an excessively large grain size precipitates but a microcrystalline R₂Fe₁₄B compound phase exists instead or a structure in which the microcrystalline R₂Fe₁₄B compound phase and an amorphous phase coexist. Accordingly, when such a rapidly solidified alloy is thermally treated, a high-performance nanocomposite magnet, in which soft magnetic phases such as iron-based boride phases are dispersed finely or distributed uniformly on the grain boundary between the hard magnetic phases, will be obtained. As used herein, the "amorphous phase" means not only a phase in which the atomic arrangement is sufficiently disordered but also a phase including embryos for crystallization, extremely small crystalline regions (with a size of several nanometers or less), and/or atomic clusters. More specifically, the "amorphous phase" herein means any phase of which the crystal structure cannot be defined by an X-ray diffraction analysis or a TEM observation.

In the prior art, even when one tries to obtain a rapidly solidified alloy including 60 volume % or more of R₂Fe₁₄B compound phase by rapidly cooling a molten alloy with a composition that is similar to that of the Ti-containing nanocomposite magnet powder included in the compound of the present invention but that includes no Ti, the resultant alloy will have a structure in which a lot of α-Fe phase has grown coarsely. Thus, when the alloy is heated and crystallized after that, the α-Fe phase will increase its grain size excessively. Once soft magnetic phases such as the α-Fe phase have grown too much, the magnetic properties of the alloy deteriorate significantly, thus making it virtually impossible to produce a quality bonded magnet out of such an alloy.

Particularly with a material alloy containing B at a relatively high percentage like the Ti-containing nanocomposite magnet powder included in the compound of the present invention, even if the molten alloy is cooled at a low rate, crystalline phases cannot be produced so easily according to the conventional method. This is because the B-rich molten alloy highly likely creates an amorphous phase. For that reason, in the prior art, even if one tries to make a rapidly solidified alloy including 60 volume % or more of R₂Fe₁₄B compound phase by decreasing the cooling rate of the melt sufficiently, not only the R₂Fe₁₄B compound phase but also the α-Fe phase or its precursor will precipitate a lot. Thus, when that alloy is heated and crystallized after that, the α-Fe phase will further grow to deteriorate the magnetic properties of the alloy seriously.

Thus, it was widely believed that the best way of increasing the coercivity of a material alloy for a nanocomposite magnet powder was cooling a melt at an increased rate to amorphize most of the rapidly solidified alloy first and then forming a highly fine and uniform structure by heating and crystallizing the amorphous phases. This is because in conventional methods, it was taken for granted that there was no other alternative but crystallizing the amorphous phases through an easily controllable heat treatment process to obtain a nanocomposite magnet having an alloy structure in which crystalline phases of very small sizes are dispersed.

Based on this popular belief, W. C. Chan et al., reported a technique of obtaining Nd₂Fe₁₄B and α-Fe phases with grain sizes on the order of several tens nm. According to Chan's technique, La, which excels in producing the amorphous phases, is added to a material alloy. Next, the material alloy is melt quenched to obtain a rapidly solidified alloy mainly composed of the amorphous phases. And then the alloy is heated and crystallized. See W. C. Chan et al., "The Effects of Refractory Metals on the Magnetic Properties of α-Fe/R₂Fe₁₄B-type Nanocomposites", IEEE Trans. Magn. No. 5, INTERMAG. 99, Kyongiu, Korea, pp. 3265-3267, 1999. This article also teaches that adding a refractory metal element such as Ti in a very small amount (e.g., 2 at%) improves the magnetic properties and that the mole fraction of Nd, rare-earth element, is preferably increased from 9.5 at% to 11.0 at% to reduce the grain sizes of the Nd₂Fe₁₄B and α-Fe phases. The refractory metal is added to prevent borides such as R₂Fe₂₃B₃ and Fe₃B from being produced and to make a material alloy for a magnet powder consisting essentially of Nd₂Fe₁₄B and α-Fe phases only.

In contrast, in the Ti-containing nanocomposite magnet powder included in the compound of the present invention, the additive Ti minimizes the nucleation of the α-Fe phase during the rapid solidification process. In addition, the additive Ti also produces soft magnetic phases such as iron-based borides and yet minimizes the grain growth thereof during the heat treatment process for crystallization. As a result, a magnet powder having excellent magnetic properties can be obtained.

That is to say, even though the material alloy includes a rare-earth element at a relatively low percentage (i.e., 9 at% or less), a magnet powder, exhibiting high magnetization (or remanence) and coercivity and showing excellent loop squareness at its demagnetization curve, can be obtained.

As described above, the coercivity of the material alloy for the Ti-containing nanocomposite magnet powder is increased by making the Nd₂Fe₁₄B phase nucleate and grow faster and earlier in the cooling process so that the Nd₂Fe₁₄B phase increases its volume percentage and yet by minimizing the grain coarsening of the soft magnetic phases. Also, the magnetization thereof increases because the additive Ti can produce a boride phase (e.g., ferromagnetic iron-based borides) from the B-rich non-magnetic amorphous phases existing in the rapidly solidified alloy and can increase the volume percentage of the ferromagnetic phases in the heated and crystallized alloy.

The material alloy obtained in this manner is preferably heated and crystallized depending on the necessity to form a structure with three or more crystalline phases including R₂Fe₁₄B compound, boride and α-Fe phases. The heat treatment is preferably conducted with its temperature and duration controlled in such a manner that the R₂Fe₁₄B compound phase will have an average crystal grain size of 10 nm to 200 nm and that the boride and α-Fe phases will have an average crystal grain size of 1 nm to 100 nm. The R₂Fe₁₄B compound phase normally has an average crystal grain size of 30 nm or more, which may be 50 nm or more depending on the conditions. On the other hand, the soft magnetic phases, such as boride and α-Fe phases, often have an average crystal grain size of 30 nm or less and typically several nanometers at most.

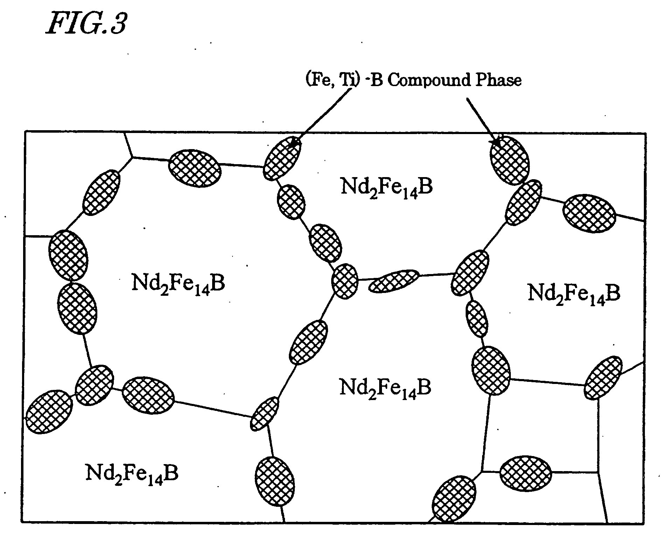

In the material alloy for the Ti-containing nanocomposite magnet powder, the R₂Fe₁₄B compound phase (hard magnetic phase) has a greater average crystal grain size than the soft magnetic phases such as α-Fe and iron-based boride phases. FIG. **3** schematically illustrates the metal structure of this material alloy. As shown in FIG. **3**, fine soft magnetic phases are distributed on the grain boundary of relatively large R₂Fe₁₄B compound phases. Even though the R₂Fe₁₄B compound phase has a relatively large average crystal grain size, the soft magnetic phases have a sufficiently small average crystal grain size because the crystal growth thereof has been minimized. Accordingly, these constituent phases are magnetically coupled together through exchange interactions and the magnetization directions of the soft magnetic phases are constrained by the hard magnetic phase. Consequently, the alloy as a whole can exhibit excellent loop squareness at its demagnetization curve.

In the manufacturing process described above, borides are easily produced. The reason is believed to be as follows. When a solidified alloy, mostly composed of the R₂Fe₁₄B compound phase, is made, the amorphous phases existing in the rapidly solidified alloy should contain an excessive amount of B. Accordingly, when the alloy is heated and crystallized, that B will bond to other elements easily, thus nucleating and growing in profusion. However, if that B bonds to other elements and produces compounds with low magnetization, then the alloy as a whole will have decreased magnetization.

The present inventors discovered and confirmed via experiments that only when Ti was added, the magnetization did not decrease but rather increased as opposed to any other metal element additive such as V, Cr, Mn, Nb or Mo. Also, the additive M (Ti, in particular) improved the loop squareness of the demagnetization curve far better than any of the elements cited above did. Accordingly, the present inventors believe that Ti plays a key role in minimizing the production of borides with low magnetization. Particularly when relatively. small amounts of B and Ti are included in the material alloy for use to prepare the Ti-containing nanocomposite magnet powder, iron-based boride phases with ferromagnetic properties will easily grow while the alloy is heat-treated. In that case, B included in the non-magnetic amorphous phases would be absorbed into the iron-based borides. As a result, the non-magnetic amorphous phases, remaining even in the alloy that has been heated and crystallized, decrease their volume percentage but the ferromagnetic crystalline phase increases its volume percentage instead, thus increasing the remanence Bᵣ.

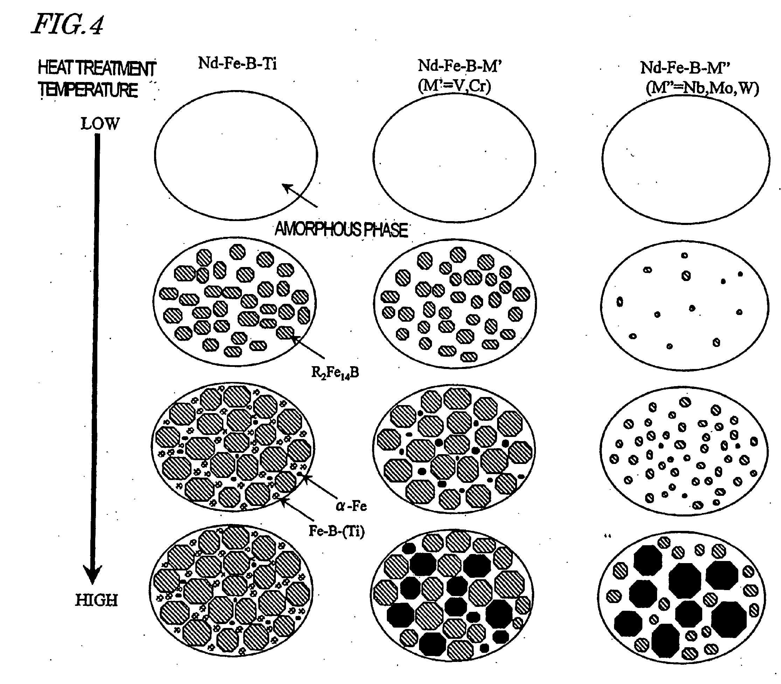

Hereinafter, this point will be further discussed with reference to FIG. **4**.

FIG. **4** schematically illustrates how rapidly solidified alloys change their microstructures during the crystallization processes thereof in a situation where Ti is added and in situations where Nb or another metal element is added instead of Ti. Where Ti is added, the grain growth of the respective constituent phases is minimized even in a temperature range exceeding the temperature at which the α-Fe phase grows rapidly. As a result, excellent hard magnetic properties can be maintained. In contrast, where any of the other metal elements (e.g., Nb, V, Cr, etc.) is added, the grain growth of the respective constituent phases advances remarkably and the exchange interactions among those phases weakens in the relatively high temperature range in which the α-Fe phase grows rapidly. As a result, the resultant demagnetization curves have decreased loop squareness.

First, the situation where Nb, Mo or W is added will be described. In this case, if the alloy is thermally treated in a relatively low temperature range where no α-Fe phase precipitates, then good hard magnetic properties, including superior loop squareness of the demagnetization curve, are achievable. In an alloy that was heat-treated at such a low temperature, however, R₂Fe₁₄B microcrystalline phases would be dispersed in the non-magnetic amorphous phases, and the alloy does not have the nanocomposite magnet structure and would not exhibit high magnetization. Also, if the alloy is heat-treated at a higher temperature, then the α-Fe phase nucleates and grows out of the amorphous phases. Unlike the situation where Ti is added, the α-Fe phase grows rapidly and increases its grain size excessively. As a result, the exchange interactions among the constituent phases weaken and the loop squareness of the demagnetization curve deteriorates significantly.

On the other hand, where Ti is added, a nanocomposite structure, including microcrystalline R₂Fe₁₄B, iron-based boride, α-Fe and amorphous phases, can be obtained by heat-treating the alloy, and the respective constituent phases are dispersed finely and uniformly. Also, the addition of Ti minimizes the grain growth of the α-Fe phase.

Where V or Cr is added, any of these additive metal elements is coupled anti-ferromagnetically with Fe to form a solid solution, thus decreasing the magnetization significantly. The additive V or Cr cannot minimize the heat-treatment-induced grain growth sufficiently, either, and deteriorates the loop squareness of the demagnetization curve.

Thus, only when Ti is added, the grain coarsening of the α-Fe phase can be minimized appropriately and iron-based borides with ferromagnetic properties can be obtained. Furthermore, Ti, as well as B and C, plays an important role as an element that delays the crystallization of Fe initial crystals (i.e., γ-Fe that will be transformed into α-Fe) during the melt quenching process and thereby facilitates the production of a supercooled liquid. Accordingly, even if the melt of the alloy is rapidly cooled and solidified at a relatively low cooling rate of about 10² °C/s to about 10⁵ °C/s, a rapidly solidified alloy, in which the α-Fe phase has not precipitated too much and the microcrystalline R₂Fe₁₄B and amorphous phases coexist, can be obtained. This greatly contributes to cost reduction because this means that a strip casting process, particularly suitable for mass production, can be selected from various melt quenching techniques.

The strip casting process is a highly productive and cost-effective method for obtaining a material alloy by rapidly cooling a molten alloy. This is because in the strip casting process, the flow rate of the melt does not have to be controlled using a nozzle or orifice but the melt may be poured directly from a tundish onto a chill roller. To amorphize the melt of an R-Fe-B rare earth alloy in a cooling rate range achievable even by the strip casting process, normally B should be added at 10 at% or more. In the prior art, however, if B is added that much, then not just non-magnetic amorphous phases but also an α-Fe phase and/or a soft magnetic Nd₂Fe₂₃B₃ phase will grow preferentially to have excessively large grain sizes when the rapidly solidified alloy is thermally treated and crystallized. Then, no uniform microcrystalline structure can be obtained. As a result, the volume percentage of ferromagnetic phases decreases, the magnetization drops, and the volume percentage of the Nd₂Fe₁₄B phase also decreases. Consequently, the coercivity decreases noticeably. However, if Ti is added, then the excessive grain growth of the α-Fe phase is minimized as described above. As a result, the magnetization increases more than expected.

It should be noted that a rapidly solidified alloy, including the Nd₂Fe₁₄B phase at a high volume percentage, could improve the resultant magnetic properties more easily than a rapidly solidified alloy including the amorphous phases at a high volume percentage. Accordingly, the volume percentage of the Nd₂Fe₁₄B phase to the overall rapidly solidified alloy is preferably 50 volume % or more, more specifically 60 volume % or more, which value was obtained by Mössbauer spectroscopy.

Hereinafter, an embodiment, in which a melt spinning process or a strip casting process (which is one of roller methods) is adopted to prepare an alloy for a Ti-containing nanocomposite magnet powder according to the present invention, will be described more specifically.

### Melt quenching machine

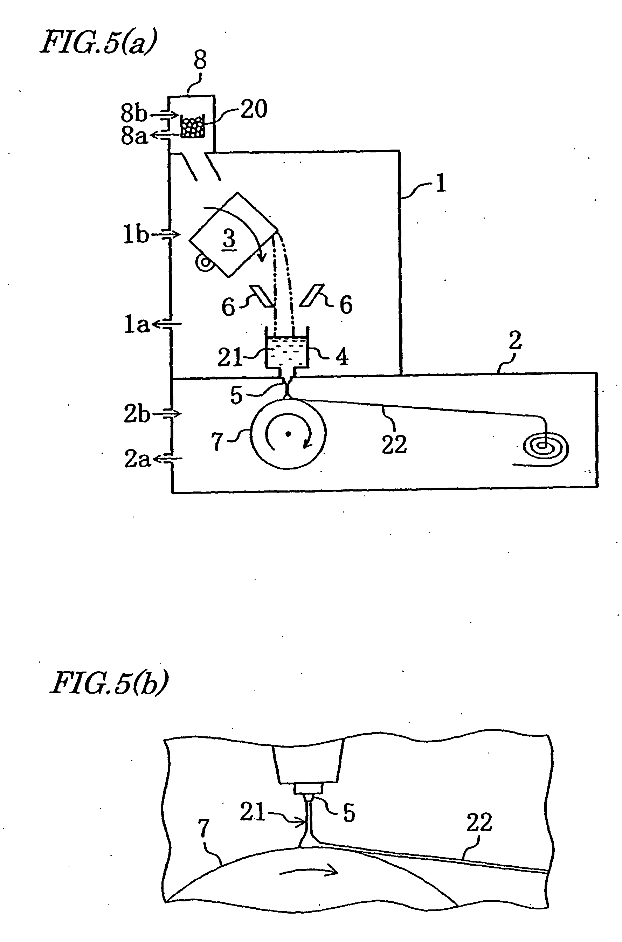

In this embodiment, a material alloy is prepared by using a melt quenching machine such as that shown in FIGS. **5(a)** and **5(b)**. The alloy preparation process is performed within an inert atmosphere to prevent the material alloy, which includes rare-earth element R and Fe that are easily oxidizable, from being oxidized. The inert gas may be either a rare gas of helium or argon, for example, or nitrogen. The rare gas of helium or argon is preferred to nitrogen, because nitrogen reacts with the rare-earth element R relatively easily.

The machine shown in FIG. **5(a)** includes material alloy melting and quenching chambers **1** and **2**, in which a vacuum or an inert atmosphere is maintained at an adjustable pressure. Specifically, FIG. **5(a)** illustrates an overall arrangement of the machine, while FIG. **5(b)** illustrates a portion of the machine on a larger scale.

As shown in FIG. **5(a)**, the melting chamber **1** includes: a melt crucible **3** to melt, at an elevated temperature, a material **20** that has been mixed to have a desired magnet alloy composition; a reservoir **4** with a teeming nozzle **5** at the bottom; and a mixed material feeder **8** to supply the mixed material into the melt crucible **3** while maintaining an airtight condition. The reservoir **4** stores the melt **21** of the material alloy therein and is provided with a heater (not shown) to maintain the temperature of the melt teemed therefrom at a predetermined level.

The quenching chamber **2** includes a rotating chill roller **7** for rapidly cooling and solidifying the melt **21** that has been dripped through the teeming nozzle **5**.

In this machine, the atmosphere and pressure inside the melting and quenching chambers **1** and **2** are controllable within prescribed ranges. For that purpose, atmospheric gas inlet ports **1b, 2b** and **8b** and outlet ports **1a, 2a** and **8a** are provided at appropriate positions of the machine. In particular, the gas outlet port **2a** is connected to a pump to control the absolute pressure inside the quenching chamber **2** within a range of 30 kPa to the normal pressure (i.e., atmospheric pressure).

The melt crucible **3** may define a desired tilt angle to pour the melt **21** through a funnel **6** into the reservoir **4**. The melt **21** is heated in the reservoir **4** by the heater (not shown).

The teeming nozzle **5** of the reservoir **4** is positioned on the boundary wall between the melting and quenching chambers **1** and **2** to drip the melt **21** in the reservoir **4** onto the surface of the chill roller **7**, which is located under the nozzle **5**. The orifice diameter of the teeming nozzle **5** may be 0.5 mm to 2.0 mm, for example. If the viscosity of the melt **21** is high, then the melt **21** cannot flow through the teeming nozzle **5** easily. In this embodiment, however, the pressure inside the quenching chamber **2** is kept lower than the pressure inside the melting chamber **1**. Accordingly, an appropriate pressure difference is created between the melting and quenching chambers **1** and **2**, and the melt **21** can be teemed smoothly.

To achieve a good thermal conductivity, the chill roller **7** may be made of Al alloy, Cu alloy, carbon steel, brass, W, Mo or bronze. However, the roller **7** is preferably made of Cu, Fe or an alloy including Cu or Fe, because such a material realizes a sufficient mechanical strength at a reasonable cost. Also, if the chill roller is made of a material other than Cu or Fe, the resultant rapidly solidified alloy cannot peel off the chill roller easily and might be wound around the roller. The chill roller **7** may have a diameter of 300 mm to 500 mm, for instance. The water-cooling capability of a water cooler provided inside the chill roller **7** is calculated and adjusted based on the latent heat of solidification and the volume of the melt teemed per unit time.

The machine shown in FIGS. **5(a)** and **5(b)** can rapidly solidify 10 kg of material alloy in 10 to 20 minutes, for example. The rapidly solidified alloy obtained in this manner is in the form of an alloy thin strip (or alloy ribbon) **22** with a thickness of 10 µm to 300 µm and a width of 2 mm to 3 mm, for example.

In this process step, the alloy thin strip has its thickness adjusted at 60 µm to 300 µm. Next, the rapidly solidified alloy is thermally treated and crystallized if necessary, and then pulverized, thereby obtaining a powder including at least 70 mass % of particles with aspect ratios (i.e., the ratio of the minor axis size to the major axis size) of 0.3 to 1.0 and at least 10 mass % of particles with particle sizes of 53 µm or less with respect to the overall powder particles. By adjusting the thickness of the alloy thin strip and pulverizing it in this manner, almost all of the powder particles can have aspect ratios of 0.3 to 1.0. It should be noted that the particle size is herein measured by classifying the powder with a standard sieve JIS Z8801.

### Melt quenching process

First, the melt **21** of the material alloy, which is represented by the general formula described above, is prepared and stored in the reservoir **4** of the melting chamber **1** shown in FIG. **5(a)**. Next, the melt **21** is dripped through the teeming nozzle **5** onto the water-cooled roller **7** to contact with, and be rapidly cooled and solidified by, the chill roller **7** within a low-pressure Ar atmosphere. In this case, an appropriate rapid solidification technique, making the cooling rate controllable precisely, should be adopted.

In this embodiment, the melt **21** is preferably cooled and solidified at a rate of 1 × 10² °C /s to 1 × 10⁸ °C /s, more preferably 1×10⁴ °C/s to 1×10⁶ °C/s.

A period of time during which the melt **21** is quenched by the chill roller **7** is equivalent to an interval between a point in time the alloy contacts with the outer circumference of the rotating chill roller **7** and a point in time the alloy leaves the roller **7**. In this period of time, the alloy has its temperature decreased to be a supercooled liquid. Thereafter, the supercooled alloy leaves the chill roller **7** and travels within the inert atmosphere. While the thin-strip alloy is traveling, the alloy has its heat dissipated into the atmospheric gas. As a result, the temperature of the alloy further drops. In this embodiment, the pressure of the atmospheric gas is 30 kPa to the atmospheric pressure. Thus, the heat of the alloy can be dissipated into the atmospheric gas even more effectively, and the Nd₂Fe₁₄B compound can nucleate and grow finely and uniformly in the alloy. It should be noted that unless an appropriate amount of element M such as Ti has been added to the material alloy, then the α-Fe phase nucleates and grows faster and earlier in the rapidly solidified alloy, thus deteriorating the resultant magnetic properties.

In this embodiment, the surface velocity of the roller is adjusted to fall within the range of 2 m/s to 30 m/s and the pressure of the atmospheric gas is set to 30 kPa or more to increase the secondary cooling effects caused by the atmospheric gas. In this manner, a rapidly solidified alloy, including at least 60 volume % of R₂Fe₁₄B compound phase with an average crystal grain size of as small as about 80 nm or less, is prepared.

A melt spinning process, in which the flow rate of the molten alloy to be supplied onto the surface of the chill roller is controlled by using the nozzle or orifice, is adopted as an exemplary melt quenching process to make the Ti-containing nanocomposite magnet powder for use in the compound of the present invention. Alternatively, a strip casting process using no nozzle or orifice or any of various methods may also be used. Also, the single roller method described above may be replaced with a twin roller method that uses a pair of chill rollers.

Among these rapid cooling techniques, the strip casting method results in a relatively low cooling rate, i.e., 10² °C/s to 10⁵ °C/s. In this embodiment, by adding an appropriate volume of Ti to the material alloy, a rapidly solidified alloy, most of which has a structure including no Fe initial crystals, can be obtained even by the strip casting process. The process cost of the strip casting method is about half or less of any other melt quenching process. Accordingly, to prepare a large quantity of rapidly solidified alloy, the strip casting method is much more effective than the melt spinning method, and is suitably applicable to mass production. However, if no element M is added to the material alloy or if Cr, V, Mn, Mo, Ta and/or W are/is added thereto instead of element Ti, then a metal structure including a lot of Fe initial crystals will be produced even in the rapidly solidified alloy prepared by the strip casting process. Consequently, the desired metal structure cannot be obtained.

Also, in the melt spinning or strip casting process, the thickness of the resultant alloy is controllable by adjusting the surface velocity of the roller. If an alloy having a thickness of 60 µm to 300 µm (typically in a thin strip shape) is prepared by adjusting the surface velocity of the roller, then the alloy has the nanocrystalline structure described above, and can be easily divided into powder particles having various orientations through a pulverization process. As a result, powder particles having an isometric shape (i.e., having an aspect ratio close to one) can be obtained easily. That is to say, the powder particles obtained will not be elongated in a particular orientation but will have an isometric (or quasi-spherical) shape.

On the other hand, if the alloy is made thinner than 60 µm by increasing the surface velocity of the roller, then the metal structure of the alloy tends to be aligned perpendicularly to the roller contact surface as in the conventional rapidly solidified magnet. In that case, the alloy is easily divided in that orientation, and the powder particles obtained by the pulverization process are likely elongated parallelly to the surface of the alloy. As a result, powder particles having an aspect ratio of less than 0.3 are obtained often.

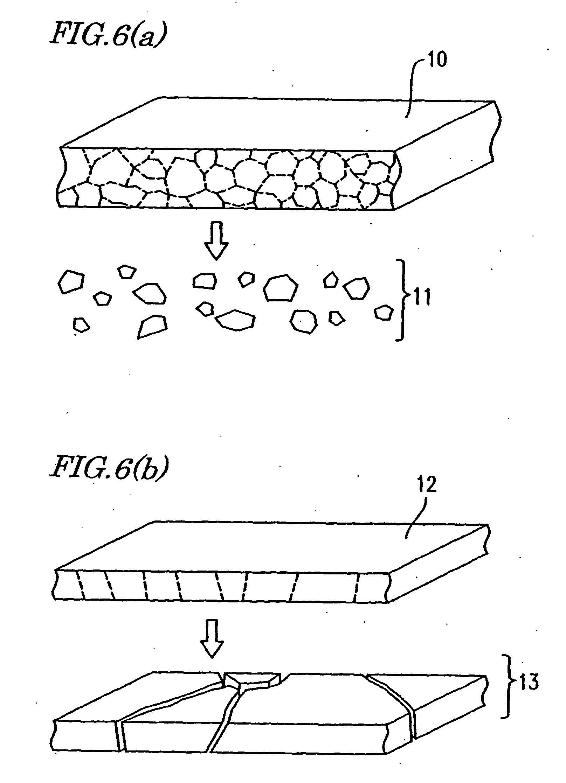

FIG. **6(a)** schematically illustrates an alloy **10** that is yet to be subjected to a pulverization process and powder particles **11** obtained by the pulverization process in a method of making a magnet powder according to this embodiment. On the other hand, FIG. **6(b)** schematically illustrates an alloy thin strip **12** that is yet to be subjected to a pulverization process and powder particles **13** obtained by the pulverization process in a conventional method of making a rapidly solidified magnet powder.

As shown in FIG. **6(a)**, in this embodiment, the alloy **10** yet to be subjected to the pulverization process is made up of isometric crystals with small crystal grain sizes, and is likely divided in random orientations to produce isometric powder particles **11** easily. On the other hand, the conventional rapidly solidified alloy is likely divided substantially perpendicularly to the surface of the alloy thin strip **12** as shown in FIG. **6(b)**, thus producing flat and elongated particles **13**.

In this manner, by controlling the roller surface velocity within the range of 2 m/s to 20 m/s (more preferably 5 m/s to 17 m/s and even more preferably 8 m/s to 15 m/s) and by adjusting the thickness of the alloy thin strip within the range of 60 µm to 300 µm, a powder having an aspect ratio of at least 0.3 (preferably 0.4 to 1.0) and exhibiting excellent magnetic properties can be obtained.

### Heat treatment

In this embodiment, the rapidly solidified alloy is thermally treated within an argon atmosphere. Preferably, the alloy is heated at a temperature rise rate of 0.08 °C/s to 20 °C/s, retained at a temperature of 550 °C to 850 °C for 30 seconds to 20 minutes, and then cooled to room temperature. This heat treatment results in nucleation and/or crystal growth of metastable phases in a remaining amorphous phase, thus forming a nanocomposite microcrystalline structure. According to this embodiment, the microcrystalline Nd₂Fe₁₄B phase already accounts for at least 60 volume % of the as-cast alloy that has just started being thermally treated. Thus, α-Fe and other crystalline phases will not increase their sizes too much and the respective constituent phases other than the microcrystalline Nd₂Fe₁₄B phase (i.e., soft magnetic phases) will be dispersed finely and uniformly.

If the heat treatment temperature is lower than 550 °C, then a lot of amorphous phases may remain even after the heat treatment and the resultant coercivity may not reach the desired level depending on the conditions of the rapid cooling process. On the other hand, if the heat treatment temperature exceeds 850 'C, the grain growth of the respective constituent phases will advance too much, thus decreasing the remanence Bᵣ and deteriorating the loop squareness of the demagnetization curve. For these reasons, the heat treatment temperature is preferably 550 °C to 850 °C, more preferably 570 °C to 820 °C.

In this embodiment, the atmospheric gas causes secondary cooling effects so that a sufficient amount of Nd₂Fe₁₄B compound phase crystallizes uniformly and finely in the rapidly solidified alloy. Accordingly, even if the rapidly solidified alloy is not heat-treated for crystallization purposes, the rapidly solidified alloy itself can exhibit sufficient magnetic properties. That is to say, the heat treatment for crystallization is not an indispensable process. However, to further improve the magnetic properties, the heat treatment is preferably conducted. In addition, even though the heat treatment is carried out at lower temperatures than the conventional process, the magnetic properties are still improvable sufficiently.

To prevent the alloy from being oxidized, the heat treatment is preferably conducted within an inert atmosphere. The heat treatment may also be performed within a vacuum of 0.1 kPa or less.

It should be noted that when carbon is added to the material alloy, the oxidation resistance of the magnet powder further increases. If a sufficient amount of C has been added thereto, then the rapidly solidified alloy may be heat-treated in the air.

The rapidly solidified alloy yet to be heat-treated may include metastable phases such as Fe₃B, Fe₂₃B₆ and R₂Fe₂₃B₃ phases in addition to the R₂Fe₁₄B compound and amorphous phases. In that case, when the heat treatment is finished, the R₂Fe₂₃B₃ phase will have disappeared due to the action of the additive Ti. Instead, crystal grains of an iron-based boride (e.g., Fe₂₃B₆), exhibiting a saturation magnetization that is equal to, or even higher than, that of the R₂Fe₁₄B phase, or α-Fe phase can be grown.

Even though the Ti-containing nanocomposite magnet powder included in the compound of the present invention includes soft magnetic phases such as the α-Fe phase, the grain growth of the soft magnetic phases has been minimized by the additive Ti and the magnet has the desired nanocrystalline structure. Accordingly, the soft and hard magnetic phases are magnetically coupled together through exchange interactions and the magnet powder can exhibit excellent magnetic properties.

After the heat treatment, the R₂Fe₁₄B compound phase needs to have an average crystal grain size of less than 300 nm, which is a single magnetic domain size. The R₂Fe₁₄B compound phase preferably has an average crystal grain size of 10 nm to 200 nm, more preferably 20 nm to 150 nm and even more preferably 20 nm to 100 nm. On the other hand, if the boride and α-Fe phases have an average crystal grain size of more than 100 nm, then the exchange interactions among the respective constituent phases weaken, thus deteriorating the loop squareness of the demagnetization curve and decreasing (BH)ₘₐₓ. Nevertheless, if the average crystal grain size of these phases is less than 1 nm, then a high coercivity cannot be achieved. In view of these considerations, the soft magnetic phases, such as the boride and α-Fe phases, preferably have an average crystal grain size of 1 nm to 100 nm, more preferably 50 nm or less, and even more preferably 30 nm or less.

It should be noted that the thin strip of the rapidly solidified alloy may be coarsely cut or coarsely pulverized before subjected to the heat treatment. When the heat treatment is finished, the resultant alloy coarse powder (or thin strip) is further pulverized to obtain a magnet powder. In this manner, the Ti-containing nanocomposite magnet powder can be prepared.

### Pulverization process

A rare-earth alloy powder with a maximum particle size of 500 µm or less, more particularly 300 µm or less, is preferably used to make a compound for a rare-earth bonded magnet according to the present invention. When the powder is compacted, the powder preferably has a mean particle size of 50 µm to 200 µm, more preferably 100 µm to 150 µm.

The aspect ratio of the magnet powder influences the flowability of the compound. The Ti-containing nanocomposite magnet powder to be included at 2 mass% or more in the compound of the present invention preferably has an aspect ratio of 0.3 to 1.0. It is naturally possible to mix the magnet powder with another Ti-containing nanocomposite magnet powder with an aspect ratio of less than 0.3. To obtain a compound with even better flowability, at least 70% of the magnet powder preferably has an aspect ratio of 0.3 to 1.0. More preferably, the compound should be prepared with a magnet powder, of which 70 mass % or more is the Ti-containing nanocomposite magnet powder with an aspect ratio of 0.3 to 1.0. It is naturally possible to mix the magnet powder with another magnet powder, such as an MQ powder, of which the powder particles have an aspect ratio of less than 0.3.

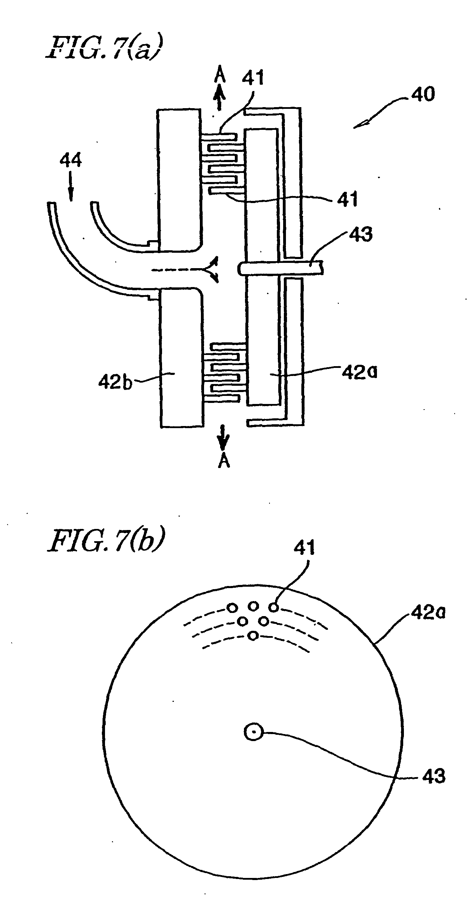

The Ti-containing nanocomposite magnet powder having such an aspect ratio can be obtained by getting an alloy thin strip with a thickness of 60 µm to 300 µm pulverized by a pin disk mill such as that shown in FIG. **7(a)**, for example. FIG. **7(a)** is a cross-sectional view illustrating an exemplary pin mill for use in this embodiment. This pin mill **40** is a pin disk mill. The mill **40** includes two disks **42a** and **42b** that are arranged so as to face each other. On one side of each of these disks **42a** and **42b**, multiple pins **41** are arranged so as not to collide against each other. At least one of these disks **42a** and **42b** rotate(s) at a high velocity. In the example illustrated in FIG. **7(a)**, the disk **42a** rotates around a shaft **43**. FIG. **7(b)** illustrates a front view of the disk **42a** that is supposed to rotate. On the disk **42a** shown in FIG. **7(b)**, the pins **41** are arranged to form a plurality of concentric circles. The pins **41** are also arranged in a similar concentric pattern on the fixed disk **42b**.

A workpiece to be pulverized by the pin disk mill is loaded through an inlet port **44** into the space between the two disks, collides against the pins **41** on the rotating and fixed disks **42a** and **42b** and is pulverized due to the impact. A powder, formed by this pulverization, is blown off in the direction indicated by the arrows A and then collected to a predetermined position finally.

In the pin mill **40** of this embodiment, the disks **42a** and **42b**, supporting the pins **41** thereon, are made of a stainless steel, for example, while the pins **41** are made of a cemented carbide material such as carbon steel, a ceramic, or sintered tungsten carbide (WC). Examples of other preferred cemented carbide materials include TiC, MoC, NbC, TaC and Cr₃C₂. Each of these cemented carbide materials is a sintered body obtained by combining a carbide powder of a Group IVa, Va or VIa metal element with Fe, Co, Ni, Mo, Cu, Pb or Sn or an alloy thereof.

By performing the pulverization process with this pin mill under such conditions that the mean particle size becomes 100 µm or less, a powder of which the particles have an aspect ratio of 0.3 to 1.0 can be obtained. Also, powder particles with particle sizes of 53 µm or less or 38 µm or less can be obtained by classifying them.

The more finely the material alloy is pulverized, the closer to 1.0 the aspect ratio tends to be. And the closer to 1.0 the aspect ratio becomes, the more significantly the fill density improves. Thus, the aspect ratio is preferably 0.4 to 1.0, more preferably 0.5 to 1.0, and most preferably 0.6 to 1.0. As will be described later, the Ti-containing nanocomposite magnet powder for use in the present invention exhibits excellent oxidation resistance. Thus, even when a powder having a high aspect ratio is prepared by pulverizing the alloy to such a small size, the magnetic properties thereof hardly deteriorate, which is very advantageous.

The pin mill that can be used effectively in this embodiment is not limited to the pin disk mill in which the pins are arranged on the disks. Alternatively, the pin mill may also have its pins arranged on cylinders. When a pin mill is used, a powder having a particle size distribution that is close to the normal distribution can be obtained, the mean particle size can be adjusted easily, and high mass productivity is achieved advantageously.

The pin mill that can be used effectively in this embodiment is not limited to the pin disk mill in which the pins are arranged on the disks. Alternatively, the pin mill may also have its pins arranged on cylinders. When a pin mill is used, a powder having a particle size distribution that is close to the normal distribution can be obtained, the mean particle size can be adjusted easily, and high mass productivity is achieved advantageously.

### Atomization process

The Ti-containing nanocomposite magnet powder for use in the present invention may be made by an atomization process, which achieves a lower cooling rate than the strip casting process (see Japanese Patent Application No. 2001-231560 that was filed by the applicant of the present application).

To make the Ti-containing nanocomposite magnet powder by an atomization process from a molten alloy having the composition described above, a gas atomization process, a centrifugal atomization process, a rotational electrode process, a vacuum process, an impact process or any other suitable process may be adopted. When the centrifugal atomization process or the rotational electrode process is adopted, the cooling rate is preferably increased by blowing a gas at a high pressure.

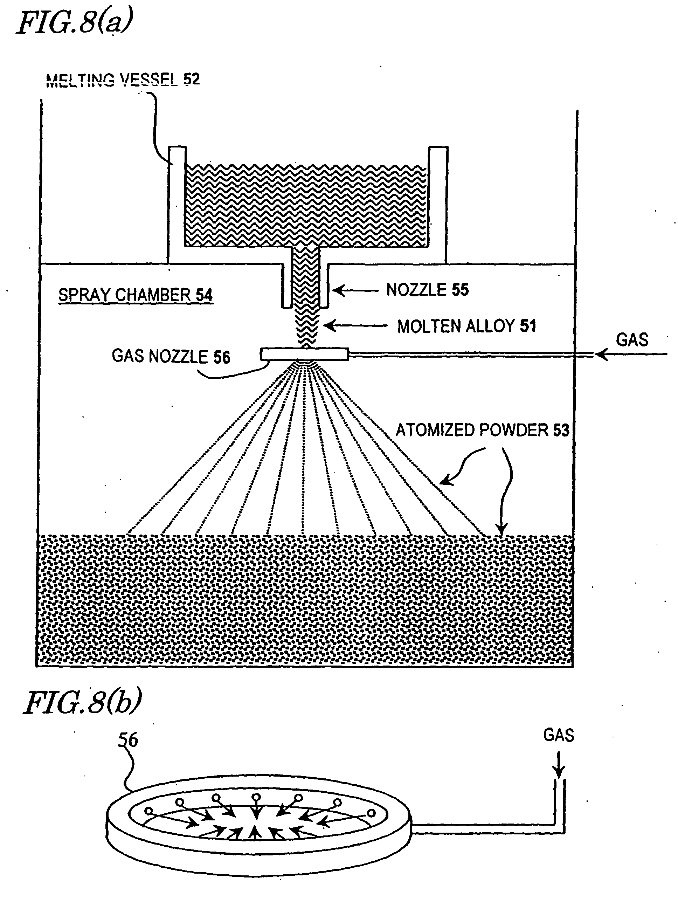

Hereinafter, an embodiment that adopts a gas atomization process will be described with reference to FIGS. **8(a)** and **8(b)**.

FIG. **8(a)** shows an exemplary configuration for a gas atomization system to be preferably used in this embodiment. The system shown in FIG. **8(a)** includes: a melting vessel **52** to melt an alloy by a high frequency heating or resistance heating process and store the resultant molten alloy **51** therein; and a spray chamber **54** in which a magnet powder (or atomized powder) **53** is formed by a gas atomization process. The melting chamber, in which the melting vessel **52** is provided, and the spray chamber **54** are preferably filled with an inert atmosphere (of argon or helium).

At the bottom of the melting vessel **52**, a melt nozzle (with a nozzle diameter of 0.5 mm to 3.0 mm) **55** is provided such that the molten alloy **51** is ejected through the melt nozzle **55** into the spray chamber **54**. A ringlike gas nozzle **56** such as that shown in FIG. **8(b)** is provided under the melt nozzle **55**. A cooling gas is ejected strongly toward the center of the ring through a plurality of holes of this ringlike gas nozzle **56**. As a result, a great number of small droplets of the molten alloy are formed and rapidly cooled while being deprived of the heat by the surrounding gas. Then the rapidly cooled and solidified metal droplets are collected as the magnet powder **53** at the bottom of the gas atomization system.

When such a gas atomization system is used, the particle size distribution of the powder can be controlled by adjusting the viscosity of the molten alloy and the energy of the spray gas.

It should be noted that when a molten alloy having a poor ability to create amorphous phases is rapidly cooled and solidified by a gas atomization process, powder particles with an amorphous or microcrystalline structure cannot be obtained unless the atomization process is carried out under such conditions as to form powder particles with particle sizes of 20 µm or less, for example. This is because the smaller the particle sizes of the powder particles to be obtained, the greater the ratio of the surface area to the volume of the respective particles and the higher the cooling effects. In the prior art, the greater the particle size, the lower the cooling rate of inside portions of particles. As a result, a crystal structure with an excessively large size is formed and the resultant magnetic properties deteriorate. When such a phenomenon occurs, the magnetic properties deteriorate significantly in a nanocomposite magnet powder, in particular.

In contrast, according to this embodiment, even if the powder particle sizes are as large as 20 µm to 100 µm, the inside portions of the powder particles can also be rapidly cooled uniformly and at a sufficiently high rate. Thus, a nanocomposite magnet powder exhibiting excellent magnetic properties can be obtained.

### Heat treatment

Thereafter, the magnet powder, obtained by using the gas atomization system described above, is preferably thermally treated within an inert atmosphere of argon (Ar), for example. The temperature increase rate of the heat treatment process is preferably 0.08 °C/s to 20 °C/s. Specifically, the magnet powder is preferably maintained at a temperature of 500 °C to 800 °C for a period of time of 30 seconds to 60 minutes, and then cooled to room temperature. By carrying out this heat treatment process, an almost completely crystalline structure can be obtained even if some amorphous phases are left in the powder particles as a result of the gas atomization process.

The heat treatment atmosphere is preferably an inert gas such as Ar gas or N₂ gas to minimize the oxidation of the alloy. Alternatively, the heat treatment may also be carried out within a vacuum of 1.3 kPa or less.

It should be noted that if carbon is added to the material alloy, the oxidation resistance of the magnet powder can be further increased. If a sufficient amount of C has been added to the material alloy, then the atomized powder may be heat-treated in the air. Also, the magnet powder of this embodiment already has a spherical shape when crystallized by the atomization process, and is not subjected to any mechanical pulverization process thereafter. Accordingly, the surface area of the magnet powder per unit mass is far smaller than that of a known mechanically pulverized powder. Thus, the magnet powder is not oxidizable so easily even when exposed to the air during the heat treatment process or any other process.

Alternatively, the Ti-containing nanocomposite magnet powder for use in the present invention may also be prepared by a rapid cooling process as a combination of the melt spinning process and the gas atomization process described above, for example.

### Why this composition is preferred

The Ti-containing nanocomposite magnet powder for use in the compound of the present invention has a composition represented by the general formula: (Fe₁₋ₘTₘ)_{100-x-y-z}QₓR_{y}M_{z}, where T is at least one element selected from the group consisting of Co and Ni; Q is at least one element selected from the group consisting of B and C and always includes B; R is at least one rare-earth element substantially excluding La and Ce; M is at least one metal element selected from the group consisting of Ti, Zr and Hf and always includes Ti; and the mole fractions x, y, z and m satisfy the inequalities of: 10 at%<x≦20 at%; 6 at%≦y<10 at%; 0.1 at%≦z≦12 at%; and 0≦m ≦0.5, respectively.

Q is either B (boron) only or a combination of B and C (carbon). The atomic percentage ratio of C to Q is preferably 0.25 or less.

If the mole fraction x of Q is 10 at% or less and if the rapid cooling rate is as low as about 10² °C/s to about 10⁵ °C/s, then it is difficult to make a rapidly solidified alloy in which the R₂Fe₁₄B crystalline phase and amorphous phase coexist. In that case, H_{cJ} will not reach 700 kA/m even when the resultant rapidly solidified alloy is thermally treated thereafter. Thus, it is difficult to make a magnet powder having an aspect ratio of 0.3 to 1.0 and exhibiting excellent magnetic properties by adopting a relatively low roller surface velocity in a melt spinning process or a strip casting process. In addition, a strip casting process or an atomization process cannot be adopted in that case, even though these processes count among most cost-effective techniques in various melt quenching processes. As a result, the manufacturing cost of the magnet powder rises unintentionally. On the other hand, if the mole fraction x of Q exceeds 20 at%, then the volume percentage of the amorphous phases, remaining even in the alloy that has been heated and crystallized, increases. Meanwhile, the percentage of the α-Fe phase, which has a higher saturation magnetization than any other constituent phase, decreases and the remanence Bᵣ drops. In view of these considerations, the mole fraction x of Q is preferably greater than 10 at% but 20 at% or less, more preferably greater than 10 at% but 17 at% or less. Even more preferably, x is greater than 10 at% but 14 at% or less, because the iron-based boride phase can be nucleated efficiently and Bᵣ can be increased in that range. It should be noted that if 15 at%<x≦20 at%, then 3.0 at%<z<12 at% is preferably satisfied.

R is at least one element to be selected from the group consisting of the rare-earth elements (including Y). Preferably, R includes substantially no La and substantially no Ce, because the presence of La or Ce decreases the coercivity and the loop squareness of the demagnetization curve. However, there is no problem of degrading the magnetic properties if very small amounts (i.e., 0.5 at% or less) of La and Ce are included as inevitable impurities. Therefore, the term "substantially no La (Ce)" or "substantially excluding La (Ce)" means that the content of La (Ce) is 0.5 at% or less.

More particularly, R preferably includes Pr or Nd as an indispensable element, a portion of which may be replaced with Dy and/or Tb. If the mole fraction y of R is less than 6 at%, then compound phases having the microcrystalline R₂Fe₁₄B structure, which contribute to expressing coercivity, do not crystallize sufficiently and a coercivity H_{cJ} of 700 kA/m or more cannot be obtained. On the other hand, if the mole fraction y of R is equal to or greater than 10 at%, then the percentages of the iron-based borides and α-Fe with ferromagnetic properties both decrease. At the same time, the anticorrosiveness and oxidation resistance of the magnet powder also decrease, thus diminishing the effects to be achieved by the present invention. For these reasons, the mole fraction y of the rare earth element R is preferably 6 at% to less than 10 at% (e.g., 6 at% to 9.5 at%), more preferably 7 at% to 9.3 at%, and even more preferably 8 at% to 9.0 at%.

The additive metal element M includes Ti as an indispensable element, and may further include Zr and/or Hf. To achieve the above-described effects, Ti is indispensable. The additive Ti increases the coercivity H_{cJ}, remanence Bᵣ and maximum energy product (BH)ₘₐₓ and improves the loop squareness of the demagnetization curve.

If the mole fraction z of the metal element M is less than 0.1 at%, then the above effects are not achieved fully even though Ti is added. Thus, z is preferably at least 0.5 at%. Nevertheless, if the mole fraction z of the metal element M exceeds 12 at%, then the volume percentage of the amorphous phases, remaining even in the alloy that has been heated and crystallized, increases and the remanence Bᵣ likely drops. In view of these considerations, the mole fraction z of the metal element M is preferably 0.1 at% to 12 at%. The lower limit of a more preferable z range is 0.5 at% and the upper limit thereof is 8.0 at%. The lower limit of an even more preferable z range is 1.0 at% and the upper limit thereof is 6.0 at%.

Also, the higher the mole fraction x of Q, the more likely the amorphous phases including Q (e.g., B) are formed. For that reason, the mole fraction z of the metal element M is preferably set relatively high. Then, soft magnetic iron-based borides with high magnetization can be nucleated and the grain growth of the iron-based borides produced can be minimized. More particularly, the respective mole fractions are preferably adjusted so as to satisfy z/x ≧0.1, more preferably z/x≧0.15.

It should be noted that the metal element M always includes Ti as an indispensable element because Ti performs particularly beneficial actions. In this case, the (atomic) ratio of Ti to the overall metal elements M is preferably at least 70%, more preferably 90% or more.

The balance of the material alloy, other than the elements described above, may be Fe alone. Alternatively, at least one transition metal element T, selected from the group consisting of Co and Ni, may be substituted for a portion of Fe, because the desired hard magnetic properties are achievable in that case also. However, if more than 50% of Fe is replaced with T (i.e., m>0.5), then a high remanence Bᵣ of 0.7 T or more cannot be obtained. For that reason, the percentage of Fe replaced is preferably from 0% to 50% (i.e., O≦m≦0.5). Also, by substituting Co for a portion of Fe, the loop squareness of the demagnetization curve improves and the Curie temperature of the R₂Fe₁₄B phase increases, thus increasing the thermal resistance. The percentage of Fe that is replaceable with Co is preferably 0.5% to 40%. Also, the magnetic properties are not affected even when Al, Si, Cu, Ga, Ag, Pt, Au, Pb, V, Cr, Mn, Nb, Mo and/or W are included at a small volume percentage. However, its mole fraction is preferably 2 at% or less.

### Oxidation resistance of magnet powder

Hereinafter, the oxidation resistance of the Ti-containing nanocomposite magnet powder for use in the compound for a rare-earth bonded magnet according to the present invention will be described in comparison with a conventional rapidly solidified magnet powder.

In the following description, the Ti-containing nanocomposite magnet powder will be compared with conventional rapidly solidified magnet powders MQP-B and MQP-O (each of which is available from Magnequench Inc. (MQI) and has a maximum particle size of 300 µm or less). A sample of the Ti-containing nanocomposite magnet powder was prepared in the following manner.

First, a rapidly solidified alloy (including 9 at% of Nd, 11 at% of B, 3 at% of Ti, 2 at% of Co and Fe as the balance and having an average thickness of 70 µm and a standard deviation σ of 13 µm) that had been made as in Example 1 to be described later was pulverized to 850 µm or less. Then, the resultant powder was fed at a rate of 20 g/min into a hoop belt furnace having a soaking zone with a length of about 500 mm and running at a belt feeding speed of 100 mm/min within an argon atmosphere that had a temperature maintained at 680 °C. In this manner, the powder was thermally treated to obtain a magnet powder. Then, the magnet powder was pulverized using the pin disk mill described above so as to have a particle size distribution in which powder particles with aspect ratios of 0.4 to 1.0 were included at about 30 volume percent. A Ti-containing nanocomposite magnet powder sample NCP-0 was obtained in this manner.

Table 1 shows the contents of oxygen and the magnetic properties of the respective magnet powders that were left in the air for an hour at various temperatures (i.e., 23 °C, 300 °C and 350 °C). The magnetic properties were measured using a vibrating sample magnetometer. The results shown in Table 1 were obtained not only at 23 °C but also after the powders had been left in the air for an hour at 300 °C and 350 °C, respectively.

As shown in Table 1, when MQP-B was left in the air for an hour at 300 °C, the oxygen contained therein increased to 0.67 mass %. If the powder MQP-B was left in the air for an hour at 350 °C, the oxygen content reached 1.93 mass %. On the other hand, when MQP-O was left in the air for an hour at 300 °C, the oxygen contained therein increased to 0.24 mass %. And if the powder MQP-O was left in the air for an hour at 350 °C, the oxygen content reached 0.59 mass %.

In contrast, even if the Ti-containing nanocomposite magnet powder NCP-0 was left in the air for an hour at 300 °C, the oxygen contained therein was as low as 0.10 mass %. Also, even if the powder NCP-0 was left in the air for an hour at 350°C , the oxygen content barely reached 0.20 mass %. Thus, it can be seen that the nanocomposite magnet powder is superior in oxidation resistance to the conventional rapidly solidified magnet powders.

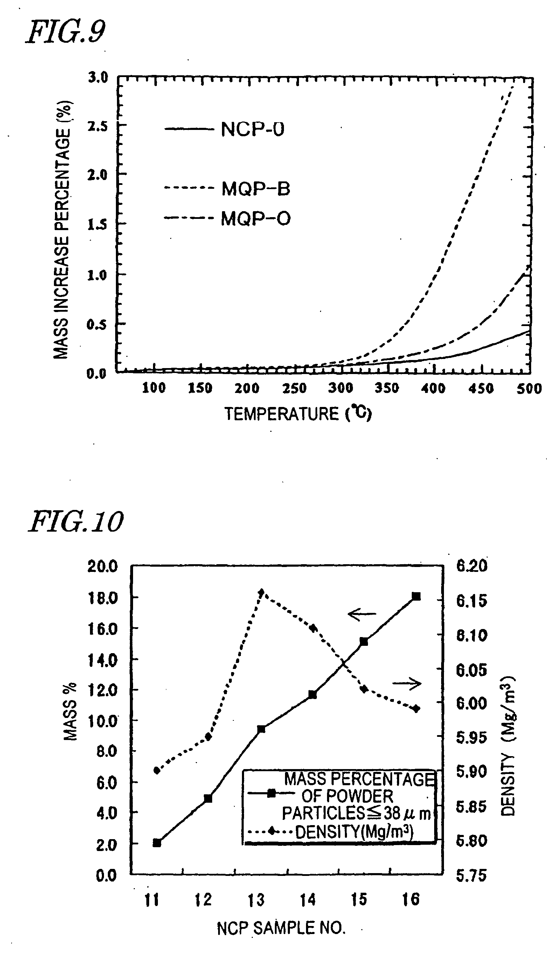

FIG. **9** shows the mass increase percentages of the respective magnet powders that were measured with a thermobalance. These powders were heated in the air at a heating rate of 10°C/min. As can be seen from FIG. **9**, even when heated in the air and oxidized, the Ti-containing nanocomposite magnet powder NCP-0 increased its mass far less than MQP-B or MQP-O did. Thus, the nanocomposite magnet powder NCP-0 has excellent oxidation resistance.

Next, looking at the magnetic properties shown in Table 1, it can be seen that MQP-B exhibited significantly deteriorated magnetic properties when oxidized. For example, when the magnet powder MQP-B was left in the air for an hour at 300 °C, (BH)ₘₐₓ thereof decreased to about 65% of that of the powder that had been left in the air for an hour at 23 °C. And after the magnet powder MQP-B had been left in the air for an hour at 350 °C, (BH)ₘₐₓ thereof decreased to about 30%. As for the magnet powder MQP-O, when it was left in the air for an hour at 350 °C, (BH)ₘₐₓ thereof decreased to less than about 80% of that of the powder that had been left in the air for an hour at 23 °C. In contrast, even if the Ti-containing nanocomposite magnet powder NCP-0 was left in the air for an hour at 350 °C, (BH)ₘₐₓ thereof decreased to about 90% of that of the powder that had been left in the air for an hour at 23 °C.

As can be seen, the Ti-containing nanocomposite magnet powder exhibits excellent oxidation resistance. Thus, even while a bonded magnet is produced from this magnet powder (e.g., while a compound is being prepared and/or thermally cured), the magnet powder is not oxidized easily. Accordingly, the anticorrosion treatment, which is necessary for conventional rapidly solidified magnet powder (e.g., MQP-B, in particular) to prevent the magnet powder from being oxidized, can be simplified or even omitted for the Ti-containing nanocomposite magnet powder. Also, when the conventional rapidly solidified magnet powder is used, the magnet powder should be heated and cured within a vacuum or an inert gas atmosphere (e.g., Ar gas) so as not to be oxidized. However, this Ti-containing nanocomposite magnet powder may be heated and cured even in the air. That is to say, by using the Ti-containing nanocomposite magnet powder, the manufacturing process of a bonded magnet can be simplified and the manufacturing cost thereof can be cut down. Furthermore, the conventional rapidly solidified magnet powder has too low oxidation resistance to be applied to making an injection-molded bonded magnet by performing the process step of compounding the powder with a resin binder or molding the mixture at a temperature of about 250 °C to about 300 °C. In contrast, by using this Ti-containing nanocomposite magnet powder, a bonded magnet can be formed by performing an injection molding process on a compound including the magnet powder. When the mixture of the Ti-containing nanocomposite magnet powder and the conventional rapidly solidified magnet powder and/or the conventional nanocomposite magnet powder is used, the magnet powder preferably has its mixing ratio adjusted in such a manner as to have an oxygen content of 0.24 mass % or less even after the powder has been left in the air for an hour at a temperature of 300 °C to fully achieve the beneficial effects brought about by the excellent oxidation resistance of this Ti-containing nanocomposite magnet powder. More preferably, the magnet powder should be prepared to have an oxygen content of 0.2 mass % or less in such a situation. Considering the magnetic properties required for bonded magnets for various types of rotating machines or actuators, for example, the magnetic properties of a magnet powder suitably applicable to these compounds for bonded magnets preferably include Bᵣ of 0.7 T or more, (BH)ₘₐₓ of 80 kJ/m³ or more and H_{cJ} of 600 kA/m or more in the end. If the magnet powder with this oxidation resistance is used, these magnetic properties are realizable even though the magnet powder is slightly oxidized while a compound and a bonded magnet are being produced.

**Table 1**

| Powder | Temperature (°C) | (BH)ₘₐₓ (kJ/m³) | Bᵣ (T) | H_{cJ} (kA/m) | O₂ (%) |
|---|---|---|---|---|---|
| NCP-0 | 23 | 107.0 | 0.802 | 1009.7 | 0.02 |
| | 300 | 103.1 | 0.790 | 989.3 | 0.10 |
| | 350 | 96.1 | 0.774 | 1006.8 | 0.20 |
| MQP-B | 23 | 122.0 | 0.899 | 732.6 | 0.04 |
| | 300 | 79.3 | 0.762 | 686.8 | 0.67 |
| | 350 | 38.2 | 0.546 | 635.8 | 1.93 |
| MQP-O | 23 | 113.0 | 0.818 | 1007.6 | 0.04 |
| | 300 | 105.7 | 0.802 | 999.0 | 0.24 |
| | 350 | 88.5 | 0.744 | 977.4 | 0.59 |

The Ti-containing nanocomposite magnet powder for use in the compound of the present invention is characterized in that the magnetic properties thereof lightly depend on the particle size due to its composition and structural features. The Ti-containing nanocomposite magnet powder includes a rare-earth element R at a relatively low mole fraction and has no R-rich grain boundary phases. In addition, fine crystal grains of a boride phase are dispersed around an R₂Fe₁₄B phase. Furthermore, since Ti has a high affinity for boron, the boride phase includes a greater amount of Ti than any other phase. Consequently, the Ti-containing nanocomposite magnet powder is superior in oxidation resistance to conventional rapidly solidified magnet powders.

The conventional rapidly solidified magnet powder includes a relatively large amount of rare-earth element R and is easily oxidizable. Thus, the smaller the size of powder particles, the more significantly the magnetic properties thereof deteriorate due to the oxidation of the powder particles at the surface. For example, the following Table 2 shows the size-by-size magnetic properties of MQP-B magnet powders that were classified with a standard sieve JIS Z8801. In MQP-B (with a maximum particle size of 300 µm or less), for example, powder particles with sizes of 75 µm or less (or 53 µm or less, in particular) exhibited deteriorated magnetic properties as shown in Table 2. For example, the remanence Bᵣ (0.79 T) of powder particles with sizes of 53 µm or less was less than 90% of the highest remanence Bᵣ (0.90 T) of powder particles with sizes of greater than 125 µm and equal to or smaller than 150 µm. As for (BH)ₘₐₓ, the average (BH)ₘₐₓ of powder particles with sizes of 53 µm or less (i.e., a simple average between (BH)ₘₐₓ of powder particles with sizes of 38 µm or less and that of powder particles with sizes of greater than 38 µm and equal to or smaller than 53 µm) was 85.5 kJ/m³. This value was less than 75% of the average (BH)ₘₐₓ (114.6 kJ/m³ ) of powder particles with sizes of greater than 150 µm and equal to or smaller than 212 µm (i.e., a simple average between (BH)ₘₐₓ of powder particles with sizes of greater than 150 µm and equal to or smaller than 180 µm and that of powder particles with sizes of greater than 180 µm and equal to or smaller than 212 µm).

In contrast, the magnetic properties of the Ti-containing nanocomposite magnet powder deteriorate to a lesser degree due to oxidation and do not depend on the particle size so heavily. For example, the following Table 3 shows the particle size distribution and size-by-size magnetic properties of the nanocomposite magnet powder NCP-0 that were measured a standard sieve JIS Z8801. In the nanocomposite magnet powder NCP-0 (with a maximum particle size of 300 µm or less), the magnetic properties hardly depend on the particle size and are generally excellent as shown in Table 3. For example, the remanence Bᵣ (about 0.829 T) of powder particles with sizes of 53 µm or less was 98% or more of the highest remanence Bᵣ (0.845 T) of powder particles with sizes of greater than 106 µm and equal to or smaller than 125 µm. As for (BH)ₘₐₓ, the average (BH)ₘₐₓ of powder particles with sizes of 53 µm or less was 104.6 kJ/m³. This value was 98% or more of the average (BH)ₘₐₓ (106.6 kJ/m³) of powder particles with sizes of greater than 150 µm and equal to or smaller than 212 µm. Ti-containing nanocomposite magnet powders with various compositions had their magnetic properties evaluated in a similar manner. As a result, in most of the compositions, the average (BH)ₘₐₓ of nanocomposite magnet powder particles with sizes of 53 µm or less was 90% or more of the average (BH)ₘₐₓ of powder particles with sizes of greater than 150 µm and equal to or smaller than 212 µm. And in many of the compositions, the former (BH)ₘₐₓ was 95% or more of the latter (BH)ₘₐₓ.

**Table 2**

| Particle Size (µm) | MQP-B | | |
|---|---|---|---|
| | (BH)ₘₐₓ (kJ/m³) | H_{cJ} (kA/m) | Bᵣ (T) |
| ≦38 | 83.7 | 744 | 0.79 |
| 38<, ≦53 | 87.2 | 752 | 0.79 |
| 53<, ≦75 | 94.2 | 739 | 0.82 |
| 75<, ≦106 | 108.3 | 748 | 0.84 |
| 106<, ≦125 | 111.5 | 754 | 0.86 |
| 125<, ≦150 | 116.8 | 741 | 0.90 |
| 150<, ≦180 | 115.7 | 750 | 0.88 |
| 180<, ≦212 | 113.4 | 763 | 0.85 |
| 212<, ≦250 | 110.1 | 755 | 0.87 |
| 250< | 112.9 | 752 | 0.88 |

**Table 3**

| Particle Size (µm) | NCP-0 | | | |
|---|---|---|---|---|
| | Mass% | (BH)ₘₐₓ (kJ/m³) | H_{cJ} (kA/m) | Bᵣ (T) |
| ≦38 | 9.36 | 104.5 | 854.66 | 0.830 |
| 38<, ≦53 | 6.83 | 104.77 | 844.00 | 0.829 |
| 53<, ≦75 | 12.34 | 107.16 | 853.39 | 0.831 |
| 75<, ≦106 | 19.76 | 110.67 | 859.75 | 0.837 |
| 106<, ≦125 | 12.23 | 112.64 | 866.12 | 0.845 |
| 125<, ≦150 | 15.24 | 111.63 | 864.21 | 0.843 |
| 150<, ≦180 | 9.42 | 105.64 | 896.30 | 0.820 |
| 180<, ≦212 | 8.89 | 107.61 | 849.41 | 0.831 |
| 212<, ≦250 | 4.27 | 99.67 | 851.16 | 0.814 |
| 250< | 1.65 | 88.44 | 844.64 | 0.800 |

As can be seen, the Ti-containing nanocomposite magnet powder exhibits magnetic properties that are at least comparable to, or even better than, those of the conventional rapidly solidified magnet powders. Thus, this nanocomposite magnet powder may be used as a magnet powder of a compound for a rare-earth bonded magnet instead of the conventional rapidly solidified magnet powder (e.g., MQ powder). Furthermore, various compounds with excellent properties described above can be obtained by using the Ti-containing nanocomposite magnet powder. Naturally, a magnet powder for a bonded magnet may consist essentially of the Ti-containing nanocomposite magnet powder alone. However, significant effects are also achievable even when not all of the MQ powder but only powder particles with sizes of 53 µm or less are replaced with the Ti-containing nanocomposite magnet powder.

Hereinafter, it will be described with reference to the experimental results how the fill density is improved by mixing fine powder particles with sizes of 53 µm or less or with sizes of 38 µm or less.

First, nanocomposite magnet powder samples NCP-1 through NCP-5 with various particle size distributions as shown in Table 4 were prepared. The magnet powder NCP-1 was obtained by getting the material alloy thereof pulverized by a power mill using a 0.5 mm φ screen, while the other magnet powders NCP-2 through NCP-5 were obtained by rotating the pin mill at 3,000 rpm, 4,000 rpm 5,000 rpm and 8,000 rpm, respectively. The tap densities of these magnet powder samples NCP-1 through NCP-5 as measured with a tap denser are shown in Table 5, in which the mass percentage of powder particles with sizes of 53 µm or less and the mass percentage of powder particles with sizes of greater than 250 µm are also shown for each of the magnet powder samples.

As can be seen from the results shown in Table 5, the samples NCP3, NCP4 and NCP5 including particles with sizes of 53 µm or less at about 10 mass % or more (more exactly 9.5 mass % or more) have tap densities of 4.2 g/cm³ or more. Thus, these magnet powder samples show excellent fill densities. Generally speaking, the fill density of a magnet powder as evaluated by the tap density thereof correlates to the fill density of a compound powder for a bonded magnet. That is to say, if a compound powder is prepared using a magnet powder with a high fill density, then the compound powder also has a high fill density. Accordingly, when a magnet powder, including 10 mass % or more of nanocomposite magnet powder particles with sizes of 53 µm or less, is used, a compound powder for a bonded magnet exhibits improved fill density and flowability. As a result, a compact of quality is obtained.

**Table 4**

| Particle Size (µm) | Mass % | | | | |
|---|---|---|---|---|---|
| | NCP-1 | NCP-2 | NCP-3 | NCP-4 | NCP-5 |
| ≦38 | 2.37 | 2.05 | 4.86 | 8.88 | 17.99 |
| 38<, ≦53 | 1.91 | 2.54 | 4.64 | 7.42 | 20.90 |
| 53<, ≦75 | 4.90 | 5.17 | 11.80 | 16.36 | 26.92 |
| 75<, ≦106 | 11.57 | 13.87 | 23.08 | 26.30 | 23.60 |
| 106<, ≦125 | 7.30 | 11.11 | 13.49 | 12.56 | 5.59 |
| 125<, ≦150 | 12.29 | 14.10 | 16.26 | 13.40 | 3.37 |
| 150<, ≦180 | 13.47 | 17.53 | 10.67 | 7.90 | 1.15 |
| 180<, ≦212 | 17.37 | 17.64 | 9.08 | 4.09 | 0.37 |
| 212<, ≦250 | 16.84 | 8.80 | 3.49 | 1.76 | 0.09 |
| 250<, ≦300 | 9.26 | 4.34 | 1.56 | 0.77 | 0.03 |
| 300< | 2.72 | 2.87 | 1.03 | 0.50 | 0.00 |

**Table 5**

| Sample No. | Mass % | | Tap Density (g/cm³) |
|---|---|---|---|
| | ≦53 µm | 250 µm< | |
| NCP-1 | 4.30 | 12.00 | 4.01 |
| NCP-2 | 4.59 | 7.21 | 4.12 |
| NCP-3 | 9.50 | 2.59 | 4.28 |
| NCP-4 | 16.30 | 1.27 | 4.25 |
| NCP-5 | 38.90 | 0.00 | 4.33 |

Furthermore, to increase the compact density, the magnet powder preferably includes powder particles with sizes of 38 µm or less. Ti-containing nanocomposite magnet powders NCP-11 through NCP-16 having the particle size distributions shown in Table 6 were prepared and then mixed with 2 mass % of epoxy resin to obtain respective compounds. Then, the respective compounds were pressed and compacted at a compaction pressure of 980 MPa ( =10 t/cm²) , thereby forming compacts for a bonded magnet. The densities of the respective compacts for a bonded magnet and the mass percentages of powder particle with sizes of 38 µm or less in the magnet powders for the respective compounds are shown in FIG. 10.

**Table 6**

| Particle Size (µm) | Mass% | | | | | |
|---|---|---|---|---|---|---|
| | NCP-11 | NCP-12 | NCP-13 | NCP-14 | NCP-15 | NCP-16 |
| ≦38 | 2.1 | 4.9 | 9.4 | 11.6 | 15.0 | 18.0 |
| 38<, ≦53 | 2.5 | 4.6 | 6.8 | 11.0 | 23.2 | 20.9 |
| 53<, ≦75 | 5.2 | 11.8 | 12.3 | 14.4 | 26.0 | 26.9 |
| 75<, ≦106 | 13.9 | 23.1 | 19.8 | 20.3 | 22.4 | 23.6 |
| 106<, ≦125 | 11.1 | 13.5 | 12.2 | 13.5 | 6.1 | 5.6 |
| 125<, ≦150 | 14.1 | 16.3 | 15.2 | 10.4 | 2.9 | 3.4 |
| 150<, ≦180 | 17.5 | 10.7 | 9.4 | 9.0 | 2.2 | 1.2 |
| 180<, ≦212 | 17.6 | 9.1 | 8.9 | 6.9 | 1.7 | 0.4 |
| 212<, ≦250 | 8.8 | 3.5 | 4.3 | 2.1 | 0.5 | 0.1 |
| 250<, ≦300 | 4.3 | 1.6 | 1.7 | 0.8 | 0.1 | 0.0 |
| 300< | 2.9 | 1.0 | 0.0 | 0.1 | 0.0 | 0.0 |

As can be seen from FIG. 10, the density of a compact decreases when the mass percentage of powder particles with sizes of 38 µm or less is too low or too high. The present inventors discovered and confirmed via experiments that a magnet powder, including powder particles with sizes of 38 µm or less at about 8 mass % or more, is preferably used to achieve a sufficiently high compact density. It should be noted, however, that if a magnet powder used includes powder particles with sizes of 38 µm or less at more than about 16 mass %, then the compactibility thereof decreases. That is to say, a quality compact of a high density cannot be obtained.

The relationship between the particle size of a magnet powder and the compactability has been described with respect to a compound to be compacted. However, the same statement is also applicable to a compound to be compacted by any other technique such as injection molding or extrusion molding.

### Methods for producing compound and magnetic body

A magnet powder for a bonded magnet, including the Ti-containing nanocomposite magnet powder described above, is compounded with a binder of a resin, for example, thereby producing a compound for a bonded magnet.

A compound to be injection molded is produced by compounding the magnet powder with a thermoplastic resin using a known kneading machine such as a kneader or an extruder. On the other hand, a compound to be compacted is produced by mixing the magnet powder with a thermosetting resin, which has been diluted with a solvent, for example, and then removing the solvent from the mixture. If necessary, the resultant magnet powder-resin mixture is disintegrated to a predetermined particle size. By adjusting the disintegrating and other conditions, the mixture may be formed into granulated powder. Also, the powder material obtained by the pulverization process may be granulated, too.

To improve the anticorrosiveness of the magnet powder, the magnet powder may have its surface treated by a known process (e.g., conversion coating process) in advance. Also, to further improve the anticorrosiveness of the magnet powder, the wettability of the magnet powder with the resin and the compactibility of the compound, any of various coupling agents, including silane, titanate, aluminate and zirconate agents, is preferably used. Also, ceramic ultra-fine particles of colloidal silica or a lubricant such as zinc stearate, calcium stearate or amide stearate is preferably used because the lubricity of the compound with the kneading or compacting machine and the flowability thereof can be both improved in that case. Furthermore, thermal stabilizer, fire retardant or plasticizer may also be used.

A compound for a magnet may be molded by any of various molding methods and may be used in any of numerous applications. Thus, depending on the intended application, the type of the resin binder and the compounding ratio of the magnet powder may be determined appropriately. Examples of usable resins include thermosetting resins such as epoxy, phenol and melamine resins, thermoplastic resins such as polyamides (including nylon 66, nylon 6 and nylon 12), polyethylene, polypropylene, polyvinyl chloride, polyester and polyphenylene sulfide, rubbers or elastomers and denatured, copolymers and mixtures thereof. In particular, compounds can be obtained relatively easily by using high-melting resins with softening points of 180 °C or more (e.g., nylon 6 and polyphenylene sulfide), which have been difficult to use at an industrial scale.

Furthermore, when the Ti-containing nanocomposite magnet powder is used, the compactibility and flowability are improvable. Accordingly, high-viscosity resins, which have been difficult to use in the prior art, may also be used. Furthermore, the magnet powder is not oxidizable easily. Thus, high-temperature resins (e.g., polyimides, liquid crystal polymers and high-molecular-weight-grade polymers), which cannot be used in the prior art due to their high melting or softening points, may also be used. As a result, the properties of the resultant bonded magnet (e.g., thermal resistance thereof) improve.

Also, a thermosetting resin that cures at a higher temperature than the prior art may be used, too. Furthermore, even a mixture of a thermosetting resin and a thermoplastic resin may be used also. For example, as disclosed by F. Yamashita in "Applications of Rare-earth Magnets to the Small Motor Industry", pp. 100-111, Proceedings of the Seventeenth International Workshop, Rare Earth Magnets and their Applications, August 2002, Newark, Delaware, USA, Edited by G. C. Hadjipanayis and M. J. Bonder, Rinton Press (which will be referred to herein as "Document Yamashita"), a material obtained by dispersing a powder of a thermoplastic resin in a thermosetting resin (e.g., epoxy resin) may be used.

Examples of preferred forming techniques include compacting, rolling, calendaring, extruding and injection molding. These forming techniques may be used in combination, too. For example, as described in the Document Yamashita cited above, compacting and rolling may be used in combination.

Among these forming techniques, the compound can be formed only in a relatively simple shape according to the compacting, rolling or extruding technique. In these techniques, however, the compound does not have to show so high a flowability during the forming process. Thus, the magnet powder can be included in the compound at a higher percentage. Since the compound of the present invention includes the Ti-containing nanocomposite magnet powder, the magnet powder percentage can be increased to more than 80%, for example, which is much higher than that achieved by a conventional technique, and can also reach as high as about 90% at the maximum. However, if the magnet powder percentage is increased excessively, then the resin binder for binding the magnet powder particles together tightly enough might be in an insufficient amount, thus possibly decreasing the mechanical strength of the resultant bonded magnet or dropping the magnet powder particles during the use of the magnet. For these reasons, the magnet powder percentage is preferably at most 85%. Also, where the compound of the present invention is compacted, the total volume of voids formed on the surface of the resultant compact can be reduced. As a result, a coating to be formed on the surface of the compact if necessary is not seriously affected, e.g., creation of pin holes can be minimized.

The present invention provides a compound with good flowability. Accordingly, such a compound can be injection-molded effectively enough. Also, the compound can be molded into a complex shape, which has been difficult to realize when a compound including the conventional rapidly solidified magnet powder is used. Also, the magnet powder can be compounded at a higher percentage (e.g., greater than 65%) than the conventional compound, thus improving the magnetic properties of the resultant magnet body. Furthermore, the Ti-containing nanocomposite magnet powder included in the compound of the present invention has excellent oxidation resistance. For that reason, even if the compound is injection-molded at a relatively high temperature with a thermoplastic resin or elastomer with a relatively high softening point, the resultant magnetic properties will not deteriorate. It should be noted that depending on the intended application, the surface of the bonded magnet is preferably covered with a coating by a resin coating or a plating technique.

The effects described above are achievable not just when the compound is injection-molded but also when the compound is subjected to either a rolling process or a multi-stage forming process, including compacting and rolling, to form a sheetlike bonded magnet. This is because the compound of the present invention also exhibits good flowability even in that situation.

### Applications of bonded magnet

As described above, the inventive compound for a bonded magnet has higher fill density (or compactibility) and thermal resistance as compared to a compound including a conventional rapidly solidified magnet powder (e.g., MQP-B produced by Magnequench Inc.). Thus, when the compound of the present invention is used, a bonded magnet, exhibiting excellent magnetic properties that are at least comparable to, or even better than, those of a bonded magnet made from the conventional rapidly solidified magnet powder, can be formed. Accordingly, the bonded magnet of the present invention can find various applications effectively.

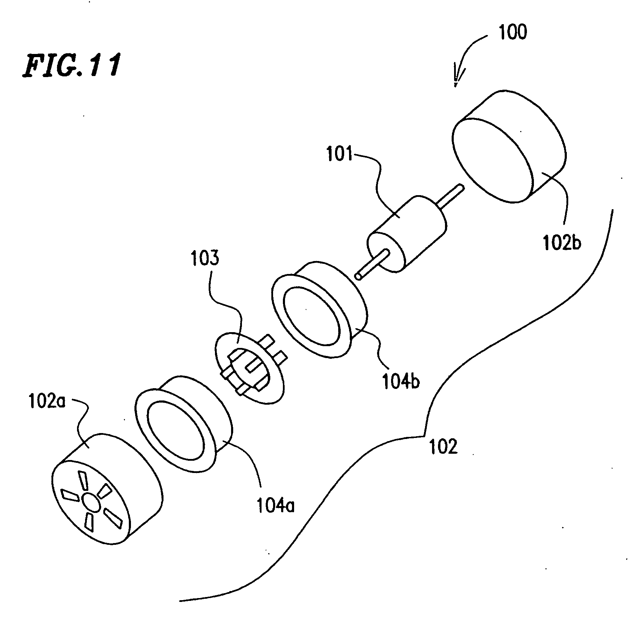

Hereinafter, an application of the bonded magnet to a stepping motor will be described with reference to FIG. **11**.

FIG. **11** is an exploded perspective view schematically illustrating the construction of a stepping motor **100** including a permanent magnet rotor. The stepping motor **100** includes a rotor **101** and a stator portion **102** that surrounds the rotor **101**. The rotor **101** includes bonded magnets that have been uniformly magnetized at 10 poles around its outer circumference with an outer diameter of 8 mm. The stator portion **102** includes: outer yokes **102a** and **102b**; two inner yokes **103** that have been bonded to the backs of the outer yokes **102a** and **102b**, respectively; and magnetizing coils **104a** and **104b** interposed between the inner yokes **103**. This stepping motor **100** is a so-called "PM-type pulse motor", in which the rotor **101** is displaced by one step angle by the magnetomotive force of the magnetizing coils **104a** and **104b** that corresponds to one pulse current.

The bonded magnets included in the rotor **101** are formed by using the compound of the present invention with the excellent fill density (or compactibility). Thus, the bonded magnets exhibit excellent magnetic properties that are at least comparable to, or even better than, those of bonded magnets made from the conventional rapidly solidified magnet powder. In addition, these bonded magnets also excel in mechanical properties (e.g., much less likely chip), thus ensuring sufficient reliability. Furthermore, these bonded magnets also have good thermal resistance.

A stepping motor including such bonded magnets made from the compound of the present invention is a high-performance motor of a small size that can ensure sufficient reliability. Thus, such a stepping motor can be used effectively in an office automation appliance such as a printer or a disc drive, a camera, or an audiovisual appliance including a camcorder.

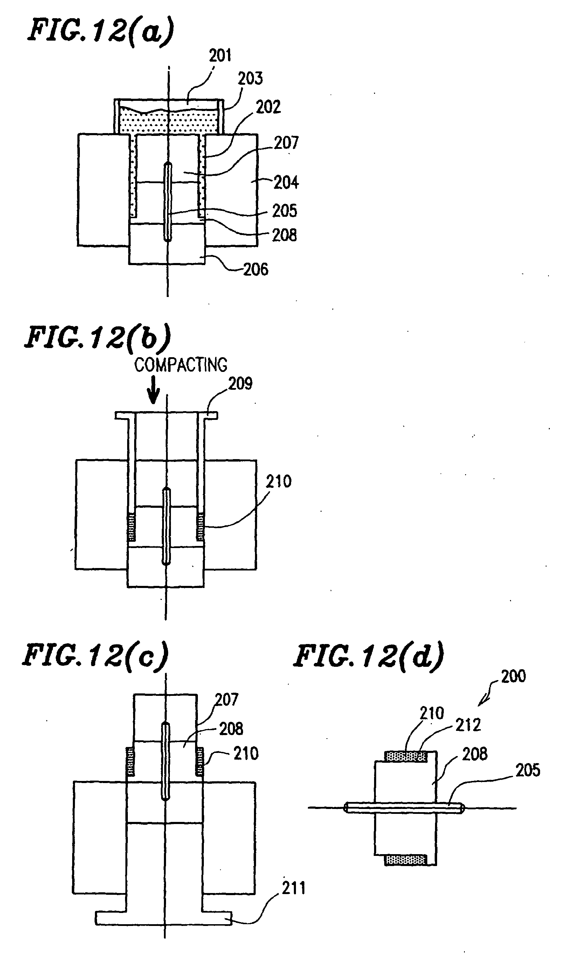

The rotor **101** may be produced by any of various methods. For example, the rotor **101** may be formed by compacting a compound including a thermosetting resin or by injection-molding or extruding a compound including a thermoplastic resin. Hereinafter, an exemplary method for producing the rotor **101** will be described with reference to FIG. **12**.

For example, where a compound including a thermosetting resin as a binder is used, the rotor **200** shown in FIG. **12(d)**, including a bonded magnet as its integral part, can be produced through the compacting process steps shown in FIGS. **12(a)** through **12(c)**.

The rotor **200** shown in FIG. **12(d)** includes a rotor shaft **205**, a yoke **208** surrounding the shaft **205**, and a bonded magnet **210**. The bonded magnet **210** is adhered to the surface **212** of the yoke **208**.

The rotor **200** may be produced by the manufacturing process steps shown in FIGS. **12(a)** through **12(c)**.

First, as shown in FIG. **12(a)**, while a feeder box **203** containing a powder compound **201** is being slid on the upper surface of a die **204**, a cavity **202** is filled with the compound **201**. The yoke **208**, including the rotor shaft **205** fitted in tightly at the center thereof, has been inserted into the die **204**. An auxiliary member **207** is provided thereon so as to cover the rotor shaft **205**. That is to say, the cavity **202** is defined between the die **204** and these members **207** and **208**.

Next, as shown in FIG. **12(b)**, the compound **201** is pressed and compacted via an upper punch **209**, for example, thereby physically bonding the yoke **208** and the compacted compound **201** together.

Thereafter, as shown in FIG. **12(c)**, the rotor compact is unloaded from the die **204**. The auxiliary member **207** is easily removable from the rotor shaft **205** and yoke **208**. As a result, the rotor shaft **205**, yoke **208** and bonded magnet **210** have been integrated together. At this point in time, however, the bonded magnet **210** is still a powder compact of the compound and the thermosetting resin included in the compound has not cured yet.

Subsequently, to cure the bonded magnet **210** and to increase the bonding strength at the interface **212** between the yoke **208** and bonded magnet **210**, the compound is cured at a predetermined temperature. The curing temperature and time may be determined appropriately according to the type of the resin used.

The compound of the present invention includes the magnet powder with excellent thermal resistance, and can be cured effectively at a higher temperature than the conventional compound. Accordingly, the bonded magnet **210** obtained in this manner exhibits much better thermal resistance, mechanical properties and adhesive strength than the conventional ones. Furthermore, in the compound of the present invention, the magnet powder itself has excellent anticorrosiveness. Thus, even if the thermosetting process is carried out in the air, the resultant magnet properties deteriorate only slightly. That is to say, there is no need to carry out the thermosetting process in an inert atmosphere, thus cutting down the process cost advantageously.

According to this compacting method, while the ringshaped bonded magnet **210** is being formed, the bonded magnet **210** can be bonded with the yoke **208** and rotor shaft **205** together. Thus, the rotor **200** can be obtained at a high productivity.

In the example described above, the powder compact is cured after having been unloaded from the die **204**. Alternatively, the compact may be cured in the die **204** by providing a heating mechanism for the die **204**. That is to say, the compound may be cured while being pressed. Furthermore, the bonded-magnet-integrated rotor does not have to be formed by the compacting process but may also be formed by an injection-molding process.

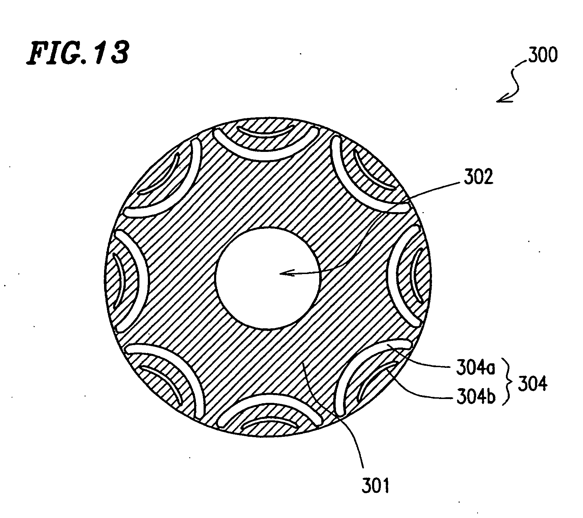

Also, the compound of the present invention exhibits a higher fill density (i.e., compactibility and/or flowability) than a compound including the conventional rapidly solidified magnet powder. Thus, even a small gap (with a width of about 2 mm, for example) can also be filled with the compound just as intended. Consequently, the compound of the present invention is effective to produce a magnet-embedded rotor **300** (see FIG. **13**) for use in an IPM (interior permanent magnet) type motor.

The magnet-embedded rotor **300** shown in FIG. **13** includes an iron core **301** (with a diameter of 80 mm and a thickness of 50 mm, for example), a rotating shaft slot **302** provided at the center of the iron core **301**, and a plurality of arced magnet slots **304** arranged along the outer circumference of the iron core **301**. In the illustrated example, eight arced magnet slots **304** are provided. Each of these slots **304** has a two-layer structure consisting of a first slot **304a** with a width of 3.5 mm, for example, and a second slot **304b** with a width of 1.8 mm, for example. These slots **304a** and **304b** are filled with the compound of the present invention, thereby forming bonded magnets. By combining this rotor **300** with a stator (not shown) in which S and N poles are arranged alternately so as to face the magnet slots **304** of the rotor **300**, an IPM type motor can be obtained.

The bonded magnets may be formed by any of various techniques. For example, where a compound including a thermosetting resin is used, an in-slot compaction technique (see Japanese Laid-Open Publication No. 63-98108, for example) may be adopted. Also, where a compound including a thermoplastic resin is used, an extrusion or injection molding technique may be adopted. According to any of these techniques, the slots **304a** and **304b** can be filled with the compound of the present invention just as intended because the compound achieves a good fill density. Thus, bonded magnets, exhibiting excellent mechanical properties and thermal resistance and showing magnetic properties that are at least comparable to, or even better than, those of the conventional magnets, can be obtained. As a result, a higher-performance, higher-reliability IPM type motor of a smaller size can be produced.

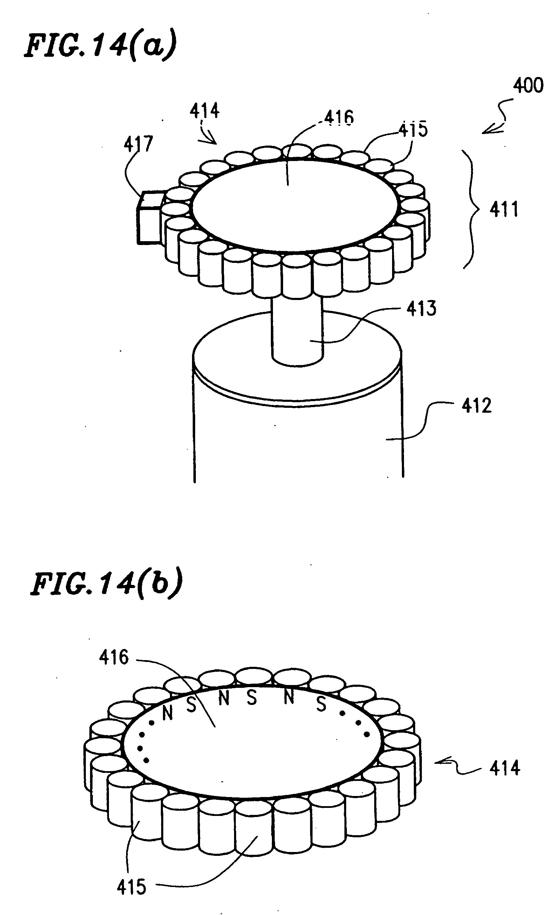

The compound of the present invention is also effective to form bonded magnets for the angle sensor (or rotary encoder) **400** shown in FIG. **14(a)**.

The rotary encoder **411** shown in FIG. **14(a)** includes a rotating shaft **413**, a rotating drum **416** coupled to the rotating shaft **413**, a rotor **414** that has been bonded to the outer circumference of the rotating drum **416** and includes a plurality of bonded magnets **415**, and a sensor **417** attached to the outer circumference of the rotor **414**. The sensor **417** may be of any type as long as the sensor **417** can detect variation in magnetic flux produced from the rotor **414**. For example, the sensor **417** may be Hall device, magnetoresistance device or magnetoimpedance effect device. The rotating shaft **413** is also coupled to a motor **412**. The sensor **417** is connected to an instrument (not shown).

The bonded magnets **415**, made of the compound of the present invention, may have a cylindrical shape as shown in FIG. **14(b)**. Also, the bonded magnets **415** are arranged around the outer circumference of the rotating drum **416** so that the N and S poles thereof alternate with each other. The bonded magnets **415** may be bonded to the rotating drum **416** with an adhesive, for example. The rotating drum **416** may be made of a metal material, for example, and does not have to be made of a magnetic material.

This rotary encoder **400** operates in the following manner. As the rotating shaft **413** of the motor **412** rotates, the rotor **414** also rotates. In the meantime, the magnetic flux, produced from the bonded magnets **415** arranged around the outer circumference of the rotor **414** and then sensed by the sensor **417**, changes its direction as the rotor **414** rotates. In response, the sensor **417** generates a signal representing such a variation in the direction of the magnetic flux (e.g., a variation in voltage or current) and outputs the signal to the instrument (not shown). In this manner, the quantity (i.e., the angle) of rotation of the motor **412** is measured.

The compound of the present invention achieves a good fill density (i.e., compactibility or flowability). Thus, bonded magnets, exhibiting excellent magnetic properties that are at least comparable to, or even better than, those of the conventional magnets and improved mechanical properties and thermal resistance, can be made of the compound. Consequently, a high-performance, high-reliability angle sensor of a small size can be obtained. The magnet of a rotary encoder does not have to be a number of magnets that are arranged as shown in FIGS. **14(a)** and **14(b)** but may also be a multipolar magnetized ring magnet provided along the outer circumference of the rotating drum **416**.

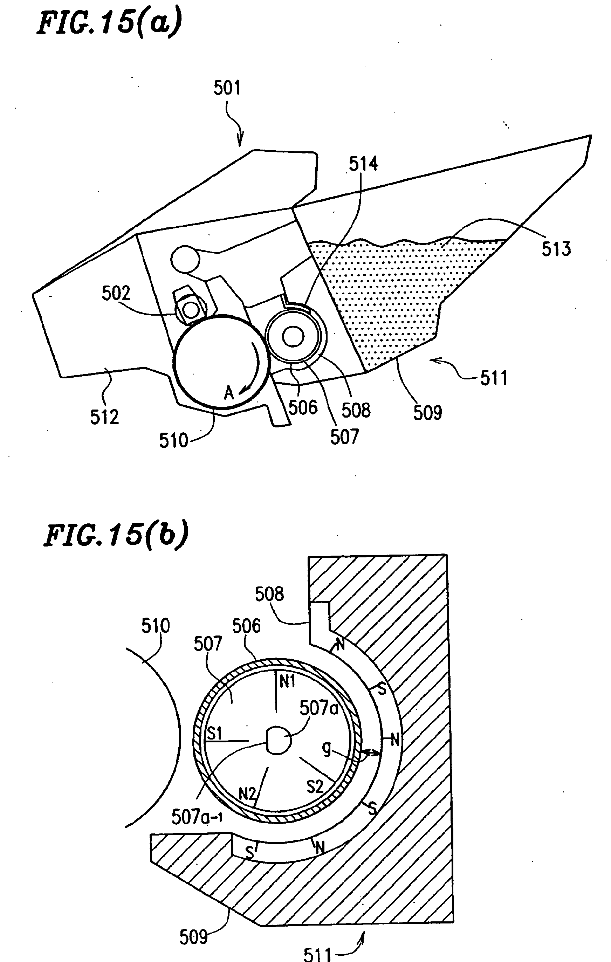

Furthermore, the compound of the present invention is also effective to make a bonded magnet for the magnetic roller illustrated in FIGS. **15(a)** and **15(b)**.

FIG. **15(a)** is a cross-sectional view schematically illustrating the structure of an electrophotograph process cartridge **501**. The cartridge **501** includes a photosensitive drum **510** driven in the direction indicated by the arrow A, a charging roller **502** for charging the drum **510**, a developer **511**, and a cleaner **512**. These members **510, 502, 511** and **512** are combined together within a single housing.

The developer **511** includes a developing container **509** in which toner **513** is stored. A developing sleeve **506** is provided in a rotatable state inside the opening of the developing container **509** so as to face the photosensitive drum **510**. The developer **511** further includes an elastic blade **514**, which contacts with the developing sleeve **506**, thereby controlling the thickness of the toner **513** that is being deposited on, and transported by, the developing sleeve **506**.

FIG. **15(b)** is a cross-sectional view schematically illustrating the configuration of the developer **511** included in the process cartridge **501**.

The developing sleeve **506** is made of a non-magnetic material and supported in a rotatable state by the developing container **509** via a bearing. A magnetic roller **507** with a diameter of 8.5 mm, for example, is provided inside of the developing sleeve **506** with a diameter of 10 mm, for example. The shaft **507a** of the magnetic roller **507** has a notch **507a-1**, which engages with the developing container **509** to secure the magnetic roller **507** to the container **509**. The magnetic roller **507** has a developing pole **S1** in front of the photosensitive drum **510** and three more poles **S2**, **N1** and **N2** at other positions.

A magnet **508** is provided so as to surround the developing sleeve **506** and forms a magnetic curtain in the gap g between the developing sleeve **506** and the magnet **508**. The magnetic curtain retains the toner in the gap, thereby preventing the toner leakage.

The magnetic roller **507** is made of the compound of the present invention, and exhibits excellent magnetic properties that are at least comparable to, or even better than, those of the conventional magnet. The roller **507** also excels in mechanical properties and thermal resistance. Accordingly, the magnetic roller **507** and developing sleeve **506** can be of smaller sizes than the conventional ones, and yet can exhibit improved performance. The magnetic roller made of the compound of the present invention is also applicable for use in a developer or developing cartridge for a photocopier or laser beam printer.

Hereinafter, examples of the present invention will be described.

### Examples Nos. 1 to 3 and Comparative Example No.1

### [How to prepare magnet powder]

A material, which had been mixed to have an alloy composition including 8.9 at% of Nd, 12.6 at% of B, 3.0 at% of Ti, 1.4 at% of C, 1.0 at% of Nb and Fe as the balance and a weight of about 5 kg, was introduced into a crucible and then inductively heated within an Ar atmosphere having a pressure maintained at about 50 kPa, thereby obtaining a molten alloy.

A rapidly solidified alloy was made from the molten alloy by a strip casting process. More specifically, the crucible was tilted to directly feed the molten alloy onto a pure copper chill roller, having a diameter of 250 mm and rotating at a surface velocity of 14 m/s, by way of a shoot, thereby rapidly cooling and solidifying the molten alloy. In feeding the melt onto the roller, the melt was branched into two flows on the shoot and the melt feeding rate was controlled to 1.3 kg/min per melt flow by adjusting the tilt angle of the crucible.

As for the rapidly solidified alloys obtained in this manner, the thicknesses of 100 cast flakes were measured with a micro meter. As a result, the rapidly solidified alloys had an average thickness of 85 µm with a standard deviation **σ** of 13 µm. Thereafter, the rapidly solidified alloy that had been obtained in this manner was pulverized to a size of 850 µm or less and then was loaded at a feeding rate of 20 g/min into a hoop belt furnace, running at a belt feeding speed of 100 mm/min and having a soaking zone with a length of about 500 mm, within an argon atmosphere that had a temperature retained at 780 °C. In this manner, the powder was thermally treated to obtain a magnet powder.

The crystal structure of the resultant magnet powder was identified by a powder XRD analysis. As a result, the magnet powder turned out to be a Ti-containing nanocomposite magnet powder including an Nd₂Fe₁₄B phase, an Fe₂₃B₆ phase and an α-Fe phase.

Thereafter, the resultant magnet powder was pulverized with a pin disk mill as already described with reference to FIGS. **7(a)** and **7(b)** to obtain a magnet powder having the particle size distribution shown in the following Table 7. It should be noted that the particle size distribution was obtained by classifying 50 g of the powder with a standard sieve complying with JIS Z8801 and plotting the masses of powder particles with respective sizes.

**Table 7**

| Particle size (µm) | Mass% |
|---|---|
| ≦38 | 10.40 |
| 38<, ≦53 | 22.74 |
| 53<, ≦75 | 27.47 |
| 75<, ≦106 | 30.17 |
| 106<, ≦125 | 8.39 |
| 125<, ≦150 | 0.55 |
| 150< | 0.28 |

The aspect ratios of the resultant 100 magnet powder particles were obtained with a scanning electron microscope. As a result, all of those particles had aspect ratios of 0.3 to 1.0.

### [How to prepare compound]

The Ti-containing nanocomposite magnet powder (with a true density of 7.5 g/cm³) and an MQP-O powder on the market (with a true density of 7.5 g/cm³), of which the particle size distribution had been almost equalized with that shown in Table 7 through classification, were mixed together at the volume percentages shown in the following Table 8.

**Table 8**

| | Ti-containing nanocomposite magnet powder | MQP-O |
|---|---|---|
| Example 1 | 100% | - |
| Example 2 | 70% | 30% |
| Example 3 | 2% | 98% |
| Cmp. Ex. 1 | - | 100% |

The resultant mixtures were used as magnet powders for bonded magnets. These magnet powders for bonded magnets and Nylon 66 (with a true density of 1.1 g/cm³) were kneaded together with a biaxial kneader, for example, thereby obtaining compounds for rare-earth bonded magnets as Examples Nos. 1 to 3 and Comparative Example No. 1. The volume percentage of the magnet powder in the resultant compound (i.e., the magnet powder percentage), which was obtained based on the true density (of 5.0 g/cm³) of the resultant compound, was 61%.

### [Evaluations]

The compounds representing these examples and comparative example were subjected to the following evaluations.

### (Evaluation of flowability)

The melt flow rates (MFR) of the compounds representing Examples Nos. 1 to 3 and Comparative Example No. 1 were evaluated with a melt indexer. The evaluation conditions included a nozzle diameter of 2.095 mm, an extrusion load of 5 kgf/cm³, and melting temperatures of 240 °C, 260 °C and 280 °C. It should be noted that the higher the MFR value of a compound, the better the flowability of the compound. The results are shown in the following Table 9.

### (Evaluation of oxidation resistance)

Increases in mass due to oxidation (i.e., increase due to oxidation) were measured on about 5 g of compounds representing Examples Nos. 1 to 3 and Comparative Example No. 1, which had been left in the air for 10 minutes at 400°C. The increase due to oxidation is represented herein as a percentage obtained by (mass after leaving - mass before leaving)/ (mass before leaving). The smaller the increase due to the oxidation of a compound, the better the oxidation resistance of the compound. The results are also shown in the following Table 9:

**Table 9**

| | MFR value (g/10 min.) | | | Increase (%) Due to oxidation |
|---|---|---|---|---|
| | 240 °C | 260 °C | 280 °C | |
| Example 1 | 136 | 220 | 366 | 0.152 |
| Example 2 | 150 | 255 | 350 | 0.180 |
| Example 3 | 114 | 190 | 320 | 0.254 |
| Cmp. Ex. 1 | 67 | 115 | 190 | 0.261 |

### (Property evaluation of injection-molded body)

The compounds representing Example No. 1 and Comparative Example No. 1 were injection-molded using a cavity with cross-sectional sizes of 2 mm × 10 mm and a height (or depth) of 60 mm at the injection temperatures shown in the following Table 10, thereby obtaining bonded magnets having a flat and elongated shape. It should be noted that this cavity shape was adopted to replicate the slot shape of a rotor for use in the IPM motor described above.

Each of these bonded magnets was equally divided into three in the cavity depth direction to obtain three magnet pieces with dimensions of 2 mm × 10 mm × 20 mm. These three magnet pieces will be referred to herein as "magnet pieces A, B and C", which are the closest to, the next closest to, and the least close to, the injection molding gate, respectively. A pulsed magnetic field of 3.2 MA/m or more was applied to these magnet pieces parallelly to the shorter side (i.e., the 2 mm side) thereof, thereby magnetizing them. Thereafter, the magnetic properties thereof were measured with a BH tracer. The results are shown in the following Table 11.

**Table 10**

| | Injection Temperature (°C) | Magnet Piece | Bᵣ (T) | H_{cJ} (kA/m) | (BH)ₘₐₓ (kJ/m³) |
|---|---|---|---|---|---|
| Example No.1 | 260 | A | 0.500 | 994.2 | 49.4 |
| | | B | 0.496 | 994.0 | 48.4 |
| | | C | 0.497 | 997.5 | 48.9 |
| | 350 | A | 0.495 | 989.7 | 47.0 |
| | | B | 0.493 | 990.3 | 47.1 |
| | | C | 0.496 | 990.4 | 47.5 |
| Cmp. Example No. 1 | 260 | A | 0.481 | 987.2 | 47.2 |
| | | B | 0.472 | 992.6 | 42.8 |
| | | C | 0.465 | 989.9 | 40.3 |
| | 350 | A | 0.433 | 993.1 | 40.7 |
| | | B | 0.425 | 984.2 | 37.8 |
| | | C | 0.414 | 988.8 | 35.1 |

As can be seen from the results shown in Table 9, the compound representing Example No. 3, including 2 mass% of Ti-containing nanocomposite magnet powder, exhibited improved flowability as compared to the compound representing Comparative Example No. 1 including only the conventional MQP-O powder. Also, when the percentage of the Ti-containing nanocomposite magnet powder was increased to 70%, the increase due to oxidation dropped to less than 0.2 mass%. That is to say, the oxidation resistance was improved. Furthermore, looking at the MFR values at 240°C and 260°C, the compound representing Example No. 2 showed the highest MFR values. Thus, it can be seen that to achieve a particularly high flowability at relatively low temperatures, the percentage of the Ti-containing nanocomposite magnet powder is preferably 70 mass% or less.

The compound representing Example No. 1, including the Ti-containing nanocomposite magnet powder, showed excellent flowability and oxidation resistance. Thus, as can be seen from the results shown in Table 10, the compound representing Example No. 1 exhibited constant magnetic properties, no matter how close to the gate the magnet piece was. That is to say, the injection molding process could be carried out constantly even with a narrow cavity. In addition, even when the molding process was performed at 350 °C, no deterioration in magnetic properties due to the oxidation of the resultant bonded magnet were observed. Such an increase in oxidation resistance is believed to have been realized not just because of the oxidation resistance of the Ti-containing nanocomposite magnet powder itself for use in the present invention but also because the respective particles, making up the magnet powder, should have been sufficiently coated with the resin.

On the other hand, the compound representing Comparative Example No. 1 showed a lower flowability and a relatively high increase due to oxidation of more than 0.26 mass% (i.e., inferior oxidation resistance). As also can be seen from the results shown in Table 10, the more distant from the gate the magnet piece was, the lower the magnetic properties thereof (i.e., the lower the fill density of the compound in the cavity). Furthermore, the magnet piece that was injection-molded at 350 °C exhibited apparently lower magnetic properties than the magnet piece that was molded at 260 °C. Thus, it can be seen that the magnetic properties deteriorated due to the oxidation of the magnet powder.

### Example No. 4 and Comparative Examples Nos. 2 and 3

### [How to prepare compound]

A compound representing Example No. 4 was prepared using only the Ti-containing nanocomposite magnet powder (with a true density of 7.5 g/cm³, see Table 7 for particle size distribution) that was used in the Examples Nos. 1 to 3 described above. On the other hand, compounds representing Comparative Examples Nos. 2 and 3 were prepared using a MQP-B powder (available from MQI Inc. and with a true density of 7.6 g/cm³ ) and a MQP-O powder (available from MQI Inc. and with a true density of 7.5 g/cm³), respectively.

More specifically, each of these magnet powders was mixed with 2 mass% of epoxy resin, which had a true density of 1.2 g/cm³ and which had been diluted with methyl ethyl ketone (where the mass percentage was calculated with respect to the resultant compound). Thereafter, the mixture was kneaded within an Ar atmosphere while the methyl ethyl ketone was being vaporized, thereby obtaining compounds for rare-earth bonded magnets representing Example No. 4 and Comparative Examples Nos. 2 and 3. The volume percentages of the rare-earth alloy powders in the compounds, which were obtained based on the true density (of 6.9 g/cm³) thereof, were 90% in the compounds representing Example No. 4 and Comparative Example No. 3 and 89% in the compound representing Comparative Example No. 2, respectively.

### [How to prepare bonded magnet]

Compressed bonded magnets, each having a diameter of 10 mm and a height of 7 mm, were made of the compounds representing Example No. 4 and Comparative Examples Nos. 2 and 3 with the compacting pressure adjusted such that each of the resultant magnets would have a density of 5.9 g/cm³. Thereafter, the magnets were thermally treated at 150 °C for one hour within an Ar gas atmosphere.

### [Evaluation]

The anticorrosiveness of those bonded magnets, which had been made of the compounds representing Example No. 4 and Comparative Examples Nos. 2 and 3, was evaluated. More specifically, the bonded magnets, which had been magnetized with a pulsed magnetic field of 3.2 MA/m or more (where n = 3 in each of the example and comparative examples), were left in a high-temperature high-humidity environment with a temperature of 80 °C and a relative humidity of 90%, thereby obtaining mass increase percentages due to oxidation (i.e., {(mass after leaving - mass before leaving) ÷ (weight before leaving)}×100) and variations in magnetic flux (Φ open) (i.e., {(magnetic flux after leaving - magnetic flux before leaving) ÷ (magnetic flux before leaving)} × 100). FIGS. **16(a)** and **16(b)** are graphs plotting the obtained results (where each set of data was averages at n ⁼ 3) with respect to the time in which the magnet was left.

As a result of these experiments, it was discovered that the bonded magnet using the compound of the present invention (as represented by Example No. 4) allowed oxidation or deterioration in magnetic properties much less easily even under the high-temperature high-humidity environment than the bonded magnets using the compounds representing Comparative Examples Nos. 2 and 3 that included the conventional rapidly solidified alloy magnet powders such as the MQP-B and MQP-O.

### Example No . 5 and Comparative Example No . 4

### [How to prepare magnet powder]

A material, which had been mixed to have an alloy composition including 8.5 at% of Nd, 11.0 at% of B, 2.5 at% of Ti, 1.0 at% of C, 2.0 at% of Co and Fe as the balance and a weight of about 5 kg, was introduced into a crucible and then inductively heated within an Ar atmosphere having a pressure maintained at about 50 kPa, thereby obtaining a molten alloy.

A rapidly solidified alloy was made from the molten alloy by a strip casting process. More specifically, the crucible was tilted to directly feed the molten alloy onto a pure copper chill roller, having a diameter of 250 mm and rotating at a surface velocity of 15 m/s, by way of a shoot, thereby rapidly cooling and solidifying the molten alloy. In feeding the melt onto the roller, the melt was branched into two flows on the shoot and the melt feeding rate was controlled to 1.3 kg/min per melt flow by adjusting the tilt angle of the crucible.

As for the rapidly solidified alloys obtained in this manner, the thicknesses of 100 cast flakes were measured with a micro meter. As a result, the rapidly solidified alloys had an average thickness of 85 µm with a standard deviation σ of 11 µm. Thereafter, the rapidly solidified alloy that had been obtained in this manner was pulverized to a size of 850 µm or less and then was loaded at a feeding rate of 20 g/min into a hoop belt furnace, running at a belt feeding speed of 100 mm/min and having a soaking zone with a length of 500 mm, within an argon atmosphere that had a temperature retained at 720 °C. In this manner, the powder was thermally treated to obtain a magnet powder.

The crystal structure of the resultant magnet powder was identified by a powder XRD analysis. As a result, the magnet powder turned out to be a Ti-containing nanocomposite magnet powder including an Nd₂Fe₁₄B phase, an Fe₂₃B₆ phase and an α-Fe phase.

Thereafter, the resultant magnet powder was pulverized with a pin disk mill as already described with reference to FIGS. **7(a)** and **7(b)** to obtain a magnet powder having the particle size distribution shown in the following Table 11. It should be noted that the particle size distribution was obtained by classifying 50 g of the powder with a standard sieve complying with JIS Z8801 and plotting the masses of powder particles with respective sizes.

**Table 11**

| Particle size (µm) | Mass% |
|---|---|
| ≦38 | 9.48 |
| 38<, ≦53 | 10.90 |
| 53<, ≦75 | 20.51 |
| 75<, ≦106 | 41.14 |
| 106<, ≦125 | 15.10 |
| 125<, ≦150 | 2.84 |
| 150< | 0.03 |

The aspect ratios of the resultant 100 magnet powder particles were obtained with a scanning electron microscope. As a result, all of those particles had aspect ratios of 0.3 to 1.0. Also, (BH)ₘₐₓ of the powder, measured with a vibrating sample magnetometer (VSM), was 102 kJ/m³.

### [How to prepare compound]

A compound representing Example No. 5 was prepared using 94 mass% of the Ti-containing nanocomposite magnet powder (with a true density of 7.5 g/cm³), 0.75 mass% of titanate coupling agent (KR-TTS produced by Ajinomoto Fine-Techno Co., Inc.) as a coupling agent, 0.5 mass% of amide stearate as a lubricant, and 4.75 mass% of Nylon 12 resin powder (with a true density of 1.1 g/cm³) as a thermoplastic resin. More specifically, the Ti-containing nanocomposite magnet powder being heated and stirred up was subjected to a coupling treatment by spraying the coupling agent toward the magnet powder. Thereafter, the Ti-containing nanocomposite magnet powder with the coupling agent was mixed with the lubricant and the thermoplastic resin, and then kneaded together by a continuous extrusion kneader at an extrusion temperature of 170 °C, thereby obtaining the compound.

A compound representing Comparative Example No. 4 was obtained by processing not the Ti-containing nanocomposite magnet powder but an MQP 13-9 powder on the market (with a true density of 7.5 g/cm³ and (BH)ₘₐₓ of 104 kJ/m³, which is comparable to that of the Ti-containing nanocomposite magnet powder) by a method similar to that used for Example No. 5. In this case, the particle size distribution of the MQP 13-9 powder had been almost equalized with that shown in Table 11 through classification.

The compounds representing Example No. 5 and Comparative Example No. 4 were injection-molded at an injection temperature of 250 °C, thereby obtaining bonded magnets with a diameter of 15 mm and a height of 5 mm.

A pulsed magnetic field of 3.2 MA/m or more was applied to the resultant bonded magnets, thereby magnetizing them. Thereafter, the magnetic properties thereof were measured with a BH tracer. As a result, the magnet that had been made of the compound representing Example No. 5 exhibited excellent magnetic properties (e.g., of which the (BH)ₘₐₓ was as high as 50.5 kJ/m³). On the other hand, the magnet that had been made of the compound representing Comparative Example No. 4 had a (BH)ₘₐₓ of 48.8 kJ/m³.

As can be seen from these results, although the compounds representing Example No. 5 and Comparative Example No. 4 used magnet powders with almost equivalent magnetic properties, a difference was still created between the resultant bonded magnets. It was also discovered that even when a magnet powder with a relatively low (BH)ₘₐₓof 100 kJ/m³ was used, an injection-molded bonded magnet, exhibiting an excellent magnetic property of more than 50 kJ/m³, could be easily obtained by mixing a coupling agent or a lubricant with the compound.

A bonded magnet exhibiting a superior magnetic property could be obtained from the compound representing Example No. 5 as compared with the compound representing Comparative Example No. 4 that had been made of a magnet powder with almost equivalent powder magnetic property. The reasons are believed to be as follows. Firstly, compared to the magnet powder used for Comparative Example No. 4, the Ti-containing nanocomposite magnet powder used for Example No. 5 had such composition and structure that should essentially cause a much lesser degree of oxidation during the kneading and injection molding processes. Also, the MQ powder used in Comparative Example No. 4 was further pulverized during the kneading process to newly expose other surfaces and further advance the oxidation unintentionally. In contrast, the Ti-containing nanocomposite magnet powder used for Example No. 5 exhibited excellent flowability during the kneading process and was much less likely pulverized unintentionally. In addition, sine the respective particles that made up the magnet powder were coated with the resin more completely, the oxidation should have been further reduced as a result.

### INDUSTRIAL APPLICABILITY

The present invention provides a compound for a rare-earth bonded magnet, which can minimize the deterioration in magnetic properties due to the heat applied to form a bonded magnet by a compaction process, can improve the compactability including flowability, and can make a rare-earth bonded magnet with excellent magnetic properties and anticorrosiveness.

The compound of the present invention has excellent flowability, and can be used particularly effectively as a compound to be injection molded.

## Claims

1. A compound for a rare-earth bonded magnet, the compound comprising a rare-earth alloy powder and a binder,
wherein the rare-earth alloy powder includes at least 2 mass % of Ti-containing nanocomposite magnet powder particles, and
wherein the Ti-containing nanocomposite magnet powder particles have a composition represented by the general formula:
(Fe₁₋ₘTₘ ) _{100-x-y-z}QₓR_{y}M_{z}
where T is at least one element selected from the group consisting of Co and Ni; Q is at least one element selected from the group consisting of B and C and always includes B; R is at least one rare-earth element substantially excluding La and Ce; M is at least one metal element selected from the group consisting of Ti, Zr and Hf and always includes Ti; and the mole fractions x, y, z and m satisfy the inequalities of: 10 at%<x≦20 at%; 6 at%≦y<10 at%; 0.1 at%≦z≦12 at%; and 0 ≦m≦0.5, respectively, and
wherein the Ti-containing nanocomposite magnet powder particles include at least two ferromagnetic crystalline phases, in which hard magnetic phases have an average crystal grain size of 10 nm to 200 nm, soft magnetic phases have an average crystal grain size of 1 nm to 100 nm, and the average crystal grain size of the soft magnetic phases is smaller than the average crystal grain size of the hard magnetic phases.

2. The compound of claim 1, wherein the soft magnetic phases are present on a grain boundary between the hard magnetic phases.

3. The compound of claim 1 or 2, wherein the Ti-containing nanocomposite magnet powder particles have aspect ratios of 0.3 to 1.0.

4. The compound of one of claims 1 to 3, wherein the rare-earth alloy powder includes at least 10 mass **%** of the Ti-containing nanocomposite magnet powder particles with particle sizes of 53 µm or less.

5. The compound of one of claims 1 to 4, wherein the rare-earth alloy powder includes at least 8 mass % of the Ti-containing nanocomposite magnet powder particles with particle sizes of 38 µm or less.

6. The compound of one of claims 1 to 5, wherein the rare-earth alloy powder includes at least 70 mass **%** of the Ti-containing nanocomposite magnet powder particles.

7. The compound of one of claims 1 to 6, wherein the rare-earth alloy powder consists essentially of the Ti-containing nanocomposite magnet powder particles.

8. The compound of one of claims 1 to 7, wherein the rare-earth alloy powder has an oxygen content of less than 0.24 mass % when left in the air for an hour at a heating temperature of 300°C.

9. The compound of one of claims 1 to 8, wherein when left in the air at 400 °C for 10 minutes, the compound increases its mass by less than 0.26 mass **%** due to oxidation.

10. The compound of one of claims 1 to 9, wherein the binder includes a thermoplastic resin.

11. The compound of claim 10, wherein the thermoplastic resin has a softening point of 180 °C or more.

12. The compound of one of claims 1 to 11, wherein the compound includes the rare-earth alloy powder at 60 mass **%** to 99 mass **%** with respect to the sum of the rare-earth alloy powder and the binder.

13. The compound of one of claims 1 to 12, wherein the rare-earth alloy powder is made up of powder particles obtained by pulverizing a rapidly solidified alloy with a thickness of 60 µm to 300 µm.

14. The compound of one of claims 1 to 13, wherein the rare-earth alloy powder is made up of powder particles obtained by pulverizing a rapidly solidified alloy that has been formed by a strip casting process.

15. The compound of one of claims 1 to 12, wherein the rare-earth alloy powder is made up of powder particles obtained from a rapidly solidified alloy that has been formed by an atomization process.

16. The compound of one of claims 1 to 15, further comprising a coupling agent.

17. A bonded magnet made of the compound of one of claims 1 to 16.

18. The bonded magnet of claim 17, wherein the magnet is made by an injection molding process.

19. The bonded magnet of claim 18, wherein the rare-earth alloy powder is loaded to at least 60 vol%.

20. An electronic appliance comprising the bonded magnet of one of claims 17 to 19.
